# EUROPÄISCHE PATENTANMELDUNG

(11) **EP 4 814 216 A1**
(43) Veröffentlichungstag der Anmeldung: **30.09.2026**
(21) Anmeldenummer: 26164530.3
(22) Anmeldetag: 13.03.2026
(51) Int. Cl.: E03B 1/04

(54) **EINRICHTUNG UND VERFAHREN ZUR VERSORGUNG EINES GRAUWASSERBEHÄLTERS MIT FRISCHWASSER AUS EINEM FRISCHWASSERANSCHLUSS UND SYSTEM ZUR GRAUWASSERVERWENDUNG**

(30) Priorität: 14.03.2025 DE 102025109895
(71) Anmelder: Sanitärtechnik Eisenberg GmbH, 07607 Eisenberg/Thür. (DE)
(72) Erfinder: Otto, Christoph, 07607 Eisenberg/ Thür. (DE); Hagemeier, Thomas, 07607 Eisenberg/ Thür. (DE); Hildebrandt, Jan, 07607 Eisenberg/ Thür. (DE)
(74) Vertreter: Hecht, Jan-David

(57) **Zusammenfassung**

Die vorliegende Erfindung betrifft eine Einrichtung (300) zur Versorgung eines Grauwasserbehälters mit Frischwasser aus einem Frischwasseranschluss, die dahingehend Verbesserungen bringt, dass die Zufuhr mit Frischwasser zu dem Grauwasserbehälter gefahrlos so erfolgt, dass eine Verunreinigung des Frischwassers mit Grauwasser wirksam verhindert wird. Dies wird dadurch erreicht, dass für die Frischwasserzufuhr zum Grauwasserhehälter (586) eine Kaskade mit mehreren hydraulischen Sprüngen in Form von vertikalen Versätzen (316, 304, 326, 586) besteht. Dabei ist die Einrichtung konstruktiv einfach aufgebaut und kostengünstig herstellbar. Außerdem ist sichergestellt, dass die Zufuhr mit Frischwasser nur dann erfolgt, wenn sie unbedingt notwendig ist.

## Beschreibung

Die vorliegende Erfindung betrifft eine Einrichtung zur Versorgung eines Grauwasserbehälters mit Frischwasser aus einem Frischwasseranschluss nach dem Oberbegriff von Anspruch 1, ein Verfahren zur Versorgung eines Grauwasserbehälters mit Frischwasser aus einem Frischwasseranschluss nach dem Oberbegriff von Anspruch 12 und ein System zur Grauwasserverwendung.

Es sind zahlreiche Sanitärelemente bekannt, die eine Spülflüssigkeit, bevorzugt zumeist Spülwasser zu ihrem Betrieb führen. Dazu zählen beispielsweise Wasserklosetts (WC), Bidets, Urinale und dgl.

Wünschenswert ist es, dass zukünftig zur Einsparung von Trinkwasser auch Grauwasser beispielsweise für solche Spülvorgänge verwendet wird. Dazu sind aber geeignete Einrichtungen zu schaffen, mit denen das Grauwasser dem Grauwasserabnehmer von einem Grauwassererzeuger zugeleitet werden kann, mit denen das Grauwasser gespeichert werden kann und mit denen ggf. eine Zufuhr von Frischwasser, insbesondere von Trinkwasser zum Grauwasser ohne Beeinträchtigung der Trinkwassersicherheit ermöglicht wird. Die Zufuhr von Frischwasser ist beispielsweise dann notwendig, wenn nicht ausreichend Grauwasser bereitsteht.

Die vorliegende Erfindung betrifft die Frischwasserzufuhr, wobei es Aufgabe der vorliegenden Erfindung war, eine Lösung zu schaffen, die dazu Verbesserungen bringt. Bevorzugt soll die Zufuhr so erfolgen, dass eine Verunreinigung des Frischwassers mit Grauwasser wirksam verhindert wird. Vorzugsweise soll die Einrichtung konstruktiv einfach aufgebaut und kostengünstig herstellbar sein. Insbesondere soll die Zufuhr mit Frischwasser nur dann erfolgen, wenn sie unbedingt notwendig ist.

Diese Aufgabe wird gelöst mit der erfindungsgemäßen Einrichtung nach Anspruch 1, dem erfindungsgemäßen Verfahren nach Anspruch 12 und dem erfindungsgemäßen System zur Grauwasserverwendung nach Anspruch 14. Vorteilhafte Weiterbildungen sind in den abhängigen Ansprüchen und in der nachfolgenden Beschreibung zusammen mit den Figuren angegeben.

Erfinderseits wurde erkannt, dass diese Aufgabe in überraschender Art und Weise dadurch besonders einfach gelöst werden kann, wenn in Strömungsrichtung des Frischwassers nach dem Frischwasseranschluss ein Frischwasserbehälter zur Zwischenspeicherung des Frischwassers besteht, weil dann ein Übertritt des Grauwassers zum Frischwasseranschluss verhindert werden kann.

Die erfindungsgemäße Einrichtung zur Versorgung eines Grauwasserbehälters mit Frischwasser aus einem Frischwasseranschluss, wobei der Frischwasseranschluss eine Auslauföffnung aufweist, ist dadurch gekennzeichnet, dass in Strömungsrichtung des Frischwassers nach dem Frischwasseranschluss ein Frischwasserbehälter zur Zwischenspeicherung des Frischwassers besteht, der mit dem Frischwasseranschluss verbunden ist.

"Grauwasser" ist im Rahmen der vorliegenden Erfindung ein fäkalienfreies, gering verschmutztes Abwasser aus Bädern, Duschen oder Waschmaschinen, das durch Aufbereitung einer Zweitnutzung als Brauch- bzw. Betriebswasser dienen kann. Küchenabwässer gehören aufgrund der höheren Belastung mit Fetten und Speiseabfällen nicht zum Grauwasser.

"Frischwasser" ist im Rahmen der vorliegenden Erfindung ein unverbrauchtes, nicht verunreinigtes Wasser, wozu auch Trinkwasser gehört.

"Trinkwasser" ist im Rahmen der vorliegenden Erfindung ein Süßwasser mit einem so hohen Reinheitsgrad, dass es - gemäß den amtlich definierten Güteanforderungen - für den menschlichen Gebrauch als geeignet eingestuft ist, insbesondere zum Trinken und zur Speisenzubereitung.

Flüssigkeiten werden entsprechend der von Ihnen ausgehenden Gefährdungsarten nach EN 1717 bzw. DIN 1988-4 in fünf unterschiedliche Kategorien eingeteilt:
Kategorie 1 bezeichnet eine Flüssigkeit, von dem keine Gefährdung der Gesundheit ausgeht und das ohne Beeinträchtigung hinsichtlich des Geruchs, Geschmacks oder der Farbe ist. Hierzu zählt beispielsweise kaltes Trinkwasser.
Kategorie 2 bezeichnet eine Flüssigkeit, von der ebenfalls keine Gefährdung der Gesundheit ausgeht, die aber eine Beeinträchtigung hinsichtlich des Geruchs, Geschmacks, Farbe oder Temperatur führt. Hierzu zählen beispielsweise Kaffee, Tee, durch Rost verfärbtes Trinkwasser und warmes Trinkwasser.
Kategorie 2 bezeichnet eine Flüssigkeit, von der eine Gefährdung der Gesundheit durch weniger giftige Stoffe ausgeht. Hierzu zählen Glykol, Natronlauge, Heizungswasser ohne Zusatz und Kupfersulfatlösung.
Kategorie 4 bezeichnet eine Flüssigkeit, von der eine Gefährdung der Gesundheit durch giftige, sehr giftige, krebserregende, mutagene oder radioaktive Stoffe einhergehend mit Lebensgefahr ausgeht. Hierzu zählen Chemikalien, Farben, chemische Reinigung, galvanische Bäder, Insektizide.
Kategorie 5 bezeichnet eine Flüssigkeit, von der eine Gefährdung der Gesundheit durch von mikrobiellen oder viralen Erregern übertragbarer Krankheiten ausgeht, wenn Lebensgefahr besteht. Hierzu zählen Hepatitisviren, Salmonellen und durch Fäkalien verunreinigtes Wasser

Bei Trinkwasser, das aus dem Frischwasseranschluss kommt, handelt es sich offensichtlich um eine Flüssigkeit der Kategorie 1.

Trinkwasser, dass offen und ohne besondere Vorkehrungen gelagert wird, wird aus Sicherheitsgründen als Flüssigkeit der Kategorie 3 eingestuft. Hierzu zählt auch das in dem Frischwasserbehälter gelagerte Frischwasser.

Aus Sicherheitsgründen wird unbehandeltes Grauwasser als Flüssigkeit der Kategorie 5 eingestuft. Hierzu zählt auch das in dem Grauwasserbehälter gelagerte Grauwasser.

In einer vorteilhaften Weiterbildung ist vorgesehen, dass in Strömungsrichtung des Frischwassers nach dem Frischwasseranschluss ein oder mehrere hydraulische Sprünge bestehen. Durch solche Sprünge wird eine Kaskade für Wasserzufuhr aufgebaut, durch die ein Übertritt des Grauwassers zum Frischwasseranschluss besonders wirksam verhindert werden kann. Vorteilhaft bestehen in den Sprüngen vertikale Versätze der Frischwasserströmung.

In einer vorteilhaften Weiterbildung ist vorgesehen, dass der Frischwasseranschluss ein Trinkwasseranschluss ist. Dann lässt sich sehr einfach immer ein ausreichender Füllstand im Grauwasserbehälter einstellen, auch wenn nicht ausreichend Grauwasser zur Verfügung steht.

In einer vorteilhaften Weiterbildung ist vorgesehen, dass der Frischwasserbehälter zwischen Frischwasseranschluss und dem Grauwasserbehälter angeordnet ist. Dadurch kann die Einrichtung leicht in Grauwassernutzungssystem integriert werden.

In einer vorteilhaften Weiterbildung ist vorgesehen, dass der Frischwasserbehälter ein Behandlungsmittel (beispielsweise eine Aufbereitungs- und/oder Reinigungsmittel) für das Frischwasser aufweist, das bevorzugt in einer entsprechenden Aufnahme angeordnet ist, die für das im Frischwasserbehälter gelagerte Frischwasser zugänglich ist. Insbesondere soll die Aufnahme zumindest teilweise unterhalb einer maximalen Füllstandshöhe im Frischwasserbehälter angeordnet sein. Dann kann das Frischwasser vor der Überführung in den Grauwasserbehälter vorbehandelt werden, was hier effektiver ist, als im Grauwasserbehälter, weil dort das Grauwasser mit behandelt werden würde.

In einer vorteilhaften Weiterbildung ist vorgesehen, dass eine Wandung besteht, die verhindert, dass Frischwasser aus dem Frischwasseranschluss unter Umgehung des Frischwasserbehälters in den Grauwasserbehälter gelangen kann. Dadurch wird verhindert, dass Frischwasser im normalen Betrieb der Einrichtung unbeabsichtigt in den Grauwasserbehälter gelangt. Dadurch kann sichergestellt werden, dass immer zuerst das zur Verfügung stehende Grauwasser in den Grauwasserbehälter eingebracht wird und Frischwasser nur dann dem Grauwasserbehälter zugeführt wird, wenn nicht ausreichend Grauwasser zur Verfügung steht.

In einer vorteilhaften Weiterbildung ist vorgesehen, dass der Grauwasserbehälter und der Frischwasserbehälter miteinander verbunden sind, bevorzugt in einem gemeinsamen Gehäuse angeordnet sind. Dann kann eine Grauwassernutzeinrichtung besonders kompakt aufgebaut sein. Die Verbindung kann dabei direkt bestehen, sie kann allerdings auch indirekt bzw. mittelbar unter Zwischenschaltung eines oder mehrerer Leitungs- oder Speicherelemente für das Frischwasser vorliegen.

In einer vorteilhaften Weiterbildung ist vorgesehen, dass der Frischwasserbehälter und der Grauwasserbehälter eigene Behälterwände aufweisen, die zumindest bereichsweise voneinander beabstandet angeordnet sind, wobei bevorzugt ein Luftspalt zwischen den Behälterwänden besteht. Dadurch ist das Frischwasser durch eine Doppelwand vom Grauwasser getrennt, wodurch der Grauwasserübertritt auch bei einem Kriechen des Grauwassers wirksam in den Frischwasserbehälter verhindert wird.

In einer vorteilhaften Weiterbildung ist vorgesehen, dass der Frischwasserbehälter in Bezug auf eine maximale Füllstandshöhe des Frischwassers ein Volumen im Bereich 10 ml bis 300 ml, bevorzugt im Bereich 40 ml bis 100 ml, insbesondere im Bereich 60 ml bis 80 ml aufweist. Dann wird eine ausreichende Menge Frischwasser bereitgestellt, ohne dass zuviel Frischwasser verschwendet wird oder aufbereitet werden muss.

In einer vorteilhaften Weiterbildung ist vorgesehen, dass der Grauwasserbehälter für die Spülung eines Sanitärgegenstandes, bevorzugt einer Toilette, eines Urinals oder dgl. bestimmt ist. Dann kann das Grauwasser besonders gut weiter verwendet werden.

In einer vorteilhaften Weiterbildung ist vorgesehen, dass der Frischwasserbehälter eine freie Wasseroberfläche von zumindest 5 cm2 bis 150 cm2, bevorzugt von zumindest 10 cm2 bis 80 cm2 und insbesondere von zumindest 15 cm2 bis 30 cm2 aufweist. Dann wird die Verdunstung des Frischwassers befördert, was den Vorteil hat, dass ein sequentielles Befüllen des Frischwasserbehälters und nachfolgend des Grauwasserbehälters erfolgt. Das ist dann besonders wünschenswert, wenn ein rein hydro-mechanisches Funktionskonzept besteht, bei dem beispielsweise über Schwimmerventile und oder Rückschlagklappen der Übertritt von Wasser eines Behälters in einen anderen gesteuert wird. Ein durch Verdunstung abgesenkter Füllstand im Frischwasserbehälter fungiert dabei als zusätzliches Verzögerungsglied im Regelmechanismus.

In einer vorteilhaften Weiterbildung ist vorgesehen, dass die Auslauföffnung vertikal nach unten auf eine Wasseroberfläche im Frischwasserbehälter weist, wobei die Auslauföffnung bevorzugt an einem Auslaufbogen angeordnet ist, wobei der Auslaufbogen insbesondere ein in einer vertikalen Ebene um 90° gebogener Auslaufbogen ist. Dann besteht eine besonders sichere Trennung des Frischwasseranschlusses und des Frischwasserbehälters. Außerdem wird ein möglichst geräuscharmes Einfüllen des Frischwassers in den Frischwasserbehälter ermöglicht.

In einer vorteilhaften Weiterbildung ist vorgesehen, dass die Auslauföffnung zumindest 5 mm, bevorzugt zumindest 10 mm, insbesondere zumindest 20 mm oberhalb einer maximalen Füllstandshöhe des Frischwasserbehälters angeordnet ist. Dadurch kann ein entsprechendes Gefälle für das Frischwasser im Frischwasserbehälter bestehen, ohne dass dieses mit dem Frischwasseranschluss in Kontakt kommt, d.h. dass das Frischwasser in dem Frischwasserbehälter entsprechend angestaut werden kann. Auch dann besteht eine besonders sichere Trennung des Frischwasseranschlusses (Kategorie 1) und des Frischwasserbehälters (Kategorie 3).

In einer vorteilhaften Weiterbildung ist vorgesehen, dass der Frischwasserbehälter einen Ablauf mit einer vertikal oberen Ablaufkante und einer vertikal unteren Abrisskante aufweist, wobei das Frischwasser über den Ablauf dem Grauwasserbehälter zuführbar ist. Dabei kann die Ablaufkante identische mit der Abrisskante sein, ist dies bevorzugt jedoch nicht. Dann besteht eine besonders definierte Zuleitung des Frischwassers in den Grauwasserbehälter.

In einer vorteilhaften Weiterbildung ist vorgesehen, dass die Ablaufkante vorzugweise zumindest 5 mm, bevorzugt zumindest 10 mm, weiter bevorzugt zumindest 20 mm, insbesondere zumindest 29 mm unterhalb der Auslauföffnung angeordnet ist. Dadurch kann ein entsprechendes Gefälle für das Frischwasser im Frischwasserbehälter bestehen, ohne dass dieses mit dem Frischwasseranschluss in Kontakt kommt, d.h. dass das Frischwasser in dem Frischwasserbehälter entsprechend angestaut werden kann. Dadurch besteht eine besonders sichere Trennung des Frischwasseranschlusses (Kategorie 1) und des Frischwasserbehälters (Kategorie 3).

In einer vorteilhaften Weiterbildung ist vorgesehen, dass die Abrisskante sich in einem Abstand vertikal oberhalb einer maximalen Füllstandshöhe des Grauwasserbehälters von zumindest 5 mm, bevorzugt zumindest 10 mm, insbesondere zumindest 20 mm befindet Dadurch besteht eine besonders sichere Trennung des Frischwasserbehälters (Kategorie 3) und des Grauwasserwasserbehälters (Kategorie 5) und somit auch des Frischwasseranschlusses (Kategorie 1) und des Grauwasserwasserbehälters (Kategorie 5).

In einer vorteilhaften Weiterbildung ist vorgesehen, dass die Ablaufkante sich in einem Abstand vertikal oberhalb einer maximalen Füllstandhöhe des Grauwasserbehälters von zumindest 5 mm, bevorzugt zumindest 10 mm, insbesondere zumindest 20 mm befindet. Dadurch besteht eine besonders sichere Trennung des Frischwasserbehälters (Kategorie 3) und des Grauwasserbehälters (Kategorie 5) und damit letztlich auch des Frischwasseranschlusses (Kategorie 1) und des Grauwasserbehälters (Kategorie 5).

In einer vorteilhaften Weiterbildung ist vorgesehen, dass zwischen Ablaufkante und Abrisskante eine Ablauffläche angeordnet ist. Dadurch wird die Geräuschentwicklung verringert. Außerdem wird der Ablauf laminarisiert und die Zuströmung erfolgt zielgerichtet, wodurch eine Schaumbildung im Grauwasserbehälter verringert werden kann.

Wenn die Ablauffläche eine vertikale Länge im Bereich 1 cm bis 10 cm, bevorzugt im Bereich von 3 cm bis 7 cm und insbesondere von 5 cm aufweist dann ist sie besonders wirksam.

Wenn die Ablauffläche eine horizontale Breite im Bereich 1 cm bis 7 cm, bevorzugt im Bereich von 2 cm bis 5 cm und insbesondere von 3 cm aufweist, dann ist sie besonders wirksam.

Wenn die Ablauffläche eine Neigung gegenüber der Horizontalen im Bereich 2° bis 80°, bevorzugt im Bereich von 4° bis 60°, weiter bevorzugt im Bereich 6° bis 40° und insbesondere von 10° aufweist, dann ist sie besonders wirksam. Außerdem wird durch diese Neigung der Zustrom durch die Auslauföffnung und damit auch durch ein Füllventil sicher abgeführt, ohne einen signifikanten Rückstau zu verursachen.

Wenn die Ablauffläche, so ausgebildet ist, dass sie die Strömung im Ablauf in Richtung zum Frischwasserbehälter zurückgelenkt, dann kann das Frischwasser nahe oder an einer Wand des Grauwasserbehälters dem Grauwasserbehälter zugeführt werden. Dadurch wird die Geräuschentwicklung verringert. Außerdem wird der Ablauf laminarisiert und die Zuströmung erfolgt zielgerichtet, wodurch eine Schaumbildung im Grauwasserbehälter verringert werden kann. Weiterhin kann der Frischwasserzulauf von weiteren Funktionsbauteilen im Grauwasserbehälter, insbesondere einem Ablaufventil weggeleitet werden, so dass deren Verkalkung verringert bzw. verhindert wird.

In einer vorteilhaften Weiterbildung ist vorgesehen, dass die Ablauffläche und/oder die Ablaufkante und/oder die Abrisskante zwischen einem Aufnahmevolumen des Frischwasserbehälters für das Frischwasser und einer Ableitfläche angeordnet ist. Dadurch besteht ein Spritzschutz für das Frischwasser. Dadurch kann zum einen das Auftreffen von Frischwasser auf weitere Funktionsbauteile im Grauwasserbehälter, insbesondere ein Ablaufventil des Grauwasserbehälters verhindert werden, so dass deren Verkalkung verringert bzw. verhindert wird. Außerdem wird die Geräuschentwicklung verringert.

Wenn die Ableitfläche sich vertikal erstreckt, dann ist sie besonders wirksam. Dabei muss die Ableitfläche nicht exakt vertikal verlaufen, sie kann auch geneigt oder gebogen sein.

Wenn die Ableitfläche eine vertikale Länge im Bereich 0,5 cm bis 5 cm, bevorzugt im Bereich 1 cm bis 3 cm, insbesondere von 2 cm aufweist, dann ist sie besonders wirksam.

Wenn die Ableitfläche eine horizontale Breite im Bereich 1 cm bis 10 cm, bevorzugt im Bereich 2 cm bis 7 cm, insbesondere von 5 cm aufweist, dann ist sie besonders wirksam.

Wenn die Ableitfläche Teil eines Ableitkanals ist, dann besteht ein besonders wirksamer Spritzschutz.

In einer vorteilhaften Weiterbildung ist vorgesehen, dass eine Durchtrittsfläche des Ablaufs des Frischwasserbehälters gleich groß oder größer ist als eine Durchtrittsfläche der Auslauföffnung. Dann wird ein Stau von Frischwasser im Frischwasserbehälter verhindert.

In einer vorteilhaften Weiterbildung ist vorgesehen, dass ein Überlauf zur Absicherung des Ablaufs gegen Verstopfung besteht. Dadurch besteht eine sicherere Trennung des Frischwasserbehälters (Kategorie 3) von dem Frischwasseranschluss (Kategorie 1) auch für den Fall, dass der Ablauf verstopft ist, weil dann das Frischwasser vor dem Erreichen des Frischwasseranschlusses über den Überlauf aus dem Frischwasserbehälter abgegeben wird.

Wenn der Überlauf eine Überlaufkante aufweist, die zumindest 5 mm, bevorzugt zumindest 10 mm, weiter bevorzugt zumindest 20 mm, insbesondere zumindest 23 mm unterhalb der Auslauföffnung angeordnet ist, dann besteht eine besonders sichere Trennung zwischen dem Frischwasserbehälter (Kategorie 3) und dem Frischwasseranschluss (Kategorie 1).

Wenn der Überlauf in den Grauwasserbehälter mündet, dann geht kein Frischwasser ungenutzt verloren.

In einer vorteilhaften Weiterbildung ist vorgesehen, dass die Überlaufkante an der Ableitfläche, bevorzugt als oberes Ende des Ableitfläche angeordnet ist. Dann ist die Einrichtung besonders kompakt aufgebaut.

In einer vorteilhaften Weiterbildung ist vorgesehen, dass zur Öffnung des Frischwasseranschlusses ein Betätigungsmittel, bevorzugt in Form eines Schwimmerventils oder eines Magnetventils mit Füllstandssensor, wobei das Schwimmerventil oder der Füllstandssensor mit der Füllstandshöhe des Grauwasserbehälters in Kontakt stehen, besteht. Dann kann die Frischwasserzufuhr zum Grauwasserbehälter besonders gut gesteuert werden. Wenn das Betätigungsmittel Verzögerungsmittel aufweist, kann sichergestellt werden, dass der Grauwasserbehälter erst dann mit Frischwasser befüllt wird, wenn kein Grauwasser mehr bereitsteht. Vorzugsweise sollen die Verzögerungsmittel eine zeitliche Verzögerung zwischen einem Absinken des Füllstandes im Grauwasserbehälter (beispielsweise in der Folge einer Grauwasserverwendung) und der Zufuhr von Frischwasser in den Frischwasserbehälter im Bereich 0 s bis 30 s, bevorzugt von 5 s bis 20 s, insbesondere von 15 s bewirken.

In einer vorteilhaften Weiterbildung ist vorgesehen, dass die Verzögerungsmittel einen Behälter umfassen, in dem eine Steuerbohrung besteht, wobei der Behälter bevorzugt eine Rückschlagklappe aufweist, die den Zufluss von Flüssigkeit in den Behälter durch die Steuerbohrung sperrt. Dann lassen sich die Verzögerungsmittel besonders einfach für ein Schwimmerventil umsetzen. Wenn der Behälter eine Abdeckung aufweist, um das direkte Eindringen von Frischwasser aus dem Frischwasserbehälter zu verhindern, dann sind die Verzögerungsmittel sehr präzise und nur von dem Füllstand im Grauwasserbehälter abhängig.

In einer vorteilhaften Weiterbildung ist vorgesehen, dass die Verzögerungszeit der Verzögerungsmittel größer ist als die erforderliche Zeit zum Herstellen eines gewünschten Niveaus mit Grauwasser in dem Grauwasserbehälter. Dann wird nur sehr wenig Frischwasser benötigt und der zweite Behälter kann vor allem durch das Grauwasser aufgefüllt werden.

In einer vorteilhaften Weiterbildung ist vorgesehen, dass der Behälter eine Einlaufkante aufweist, die tiefer liegt als eine maximale Füllstandshöhe des Grauwasserbehälters. Dann wird die Wirkung der Verzögerungsmittel optimiert.

In einer vorteilhaften Weiterbildung ist vorgesehen, dass der Schwimmkörper des Schwimmerventils in dem Behälter angeordnet ist. Auch dann wird die Wirkung der Verzögerungsmittel optimiert.

Unabhängiger Schutz wird beansprucht für das erfindungsgemäße Verfahren zur Versorgung eines Grauwasserbehälters mit Frischwasser aus einem Frischwasseranschluss, wobei der Frischwasseranschluss eine Auslauföffnung aufweist, das dadurch gekennzeichnet ist, dass in Strömungsrichtung des Frischwassers nach dem Frischwasseranschluss ein Frischwasserbehälter zur Zwischenspeicherung des Frischwassers verwendet wird, der mit dem Frischwasseranschluss verbunden ist.

In einer vorteilhaften Weiterbildung ist vorgesehen, dass die erfindungsgemäße Einrichtung verwendet wird.

Selbständiger Schutz wird beansprucht für das erfindungsgemäße System zur Grauwasserverwendung, das die erfindungsgemäße Einrichtung zur Frischwasserversorgung umfasst, wobei zusätzlich ein Grauwassererzeuger und/oder ein Grauwasserabnehmer bestehen.

In einer vorteilhaften Weiterbildung umfasst das System außerdem die erfindungsgemäße Einrichtung zur Speicherung von Grauwasser in einem Grauwasserbehälter. Mit diesem erfindungsgemäßen System kann Grauwasser in einem Grauwasserbehälter ausgezeichnet gespeichert werden, wobei im Falle, dass nicht ausreichend Grauwasser zur Verfügung steht, dann Frischwasser dem Grauwasserbehälter zugeführt werden kann. Bezüglich der Ausgestaltung der Einrichtung zur Speicherung von Grauwasser in einem Grauwasserbehälter und des Verfahrens zur Speicherung von Grauwasser in einem Grauwasserbehälter wird auf die von der Anmelderin am selben Tage eingereichte Gebrauchsmusteranmeldung DE 20 2025 101 378.9 "Einrichtung zur Speicherung von Grauwasser" verwiesen, deren vollständiger Inhalt durch Verweis vollständig einbezogen wird.

Wenn die erfindungsgemäße Einrichtung zur Versorgung eines Grauwasserbehälters mit Frischwasser aus einem Frischwasseranschluss mit einer Wandung ausgebildet ist, die zumindest bereichsweise eine Beabstandung zum Grauwasserbehälter aufweist, wobei die Beabstandung insbesondere als Luftspalt ausgebildet ist, dann ist das Frischwasser durch eine Doppelwand vom Grauwasser getrennt und es kann der Übertritt von Grauwasser dem Frischwasserbehälter auch dann wirksam verhindert werden, wenn Grauwasser an Behälterwänden hochkriecht.

In einer vorteilhaften Weiterbildung umfasst das System außerdem die erfindungsgemäße Einrichtung zur Zuleitung von Grauwasser von einem Grauwassererzeuger zu einem Grauwasserabnehmer. Dann kann das Grauwasser einem Grauwassererzeuger perfekt entnommen werden. Bevorzugt kann es dabei zuvor aufbereitet, insbesondere gefiltert und stabilisiert werden. Bezüglich der Ausgestaltung der Einrichtung zur Zuleitung von Grauwasser von einem Grauwassererzeuger zu einem Grauwasserabnehmer und des Verfahrens zur Zuleitung von Grauwasser von einem Grauwassererzeuger zu einem Grauwasserabnehmer wird auf die von der Anmelderin am selben Tage eingereichte Gebrauchsmusteranmeldung DE 20 2025 101 371.1 "Einrichtung zur Zuleitung von Grauwasser von einem Grauwassererzeuger zu einem Grauwasserabnehmer" verwiesen, deren vollständiger Inhalt durch Verweis vollständig einbezogen wird.

Bei den angegebenen Wertebereichen sind nicht nur die angegebenen Einzelwerte und Grenzwerte, sondern auch alle zwischen angegebenen Werten liegende Zwischenwerte denkbar und relevant. Das heißt, dass sämtliche zwischen den jeweils angegebenen Einzelwerten, Minimal- und Maximalwerten liegende Werte ebenfalls vorliegen können und erfindungswesentlich sind. Es gilt damit jedweder Zwischenwert zwischen den jeweils angegebenen Einzelwerten, Minimal- und Maximalwerten des jeweiligen Intervalls als erfindungswesentlich offenbart, insbesondere in jeweiligen Stufen von 0,1 Einheiten (beispielsweise 0,1 mm, 0,1 cm, 0,1°, 0,1 s). Ein solcher Zwischenwert muss sich nicht innerhalb eines konkret angegeben Intervalls befinden, er kann sich auch zwischen der Grenze des einen Intervalls und der Grenze eines anderen Intervalls, der Grenze eines Intervalls und einem Einzelwert sowie zwei Einzelwerten befinden, solange sich die Werte jeweils auf dasselbe Element beziehen.

Die jetzt mit der Anmeldung und auch die später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist somit von der Offenbarung dieser Anmeldung abgedeckt.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

Somit können alle in der allgemeinen Beschreibung der Erfindung, der Beschreibung der Ausführungsbeispiele, den nachfolgenden Ansprüchen und in den Figuren dargestellten Merkmale sowohl einzeln als auch in beliebiger Kombination miteinander erfindungswesentlich sein. Diese Merkmale bzw. Merkmalskombinationen können jeweils eine selbständige Erfindung begründen, deren Inanspruchnahme sich ausdrücklich vorbehalten wird. Dabei müssen einzelne Merkmale aus der Beschreibung eines Ausführungsbeispiels nicht zwingend mit ein oder mehreren oder allen anderen in der Beschreibung dieses Ausführungsbeispiels angegebenen Merkmale kombiniert werden, diesbezüglich ist jede Unterkombination ausdrücklich mit offenbart. Außerdem können gegenständliche Merkmale einer Vorrichtung, einer Einrichtung oder eines Systems umformuliert auch als Verfahrensmerkmale Verwendung finden und Verfahrensmerkmale können umformuliert als gegenständliche Merkmale einer Vorrichtung, einer Einrichtung oder eines Systems Verwendung finden. Eine solche Umformulierung ist somit automatisch mit offenbart.

Die Merkmale und weitere Vorteile der vorliegenden Erfindung werden im Folgenden anhand der Beschreibung eines bevorzugten Ausführungsbeispiels im Zusammenhang mit den Figuren deutlich werden. Dabei zeigen rein schematisch:
- Fig. 1: die erfindungsgemäße Einrichtung zur Frischwasserzufuhr im Rahmen der erfindungsgemäßen Einrichtung zur Grauwasserspeicherung in einer Ansicht von oben,
- Fig. 2: die Einrichtung zur Grauwasserspeicherung nach Fig. 1 in einer ersten Seitenansicht,
- Fig. 3: die Einrichtung zur Grauwasserspeicherung nach Fig. 1 in einer zweiten Seitenansicht,
- Fig. 4: die erfindungsgemäße Einrichtung zur Frischwasserzufuhr in einer Draufansicht von oben,
- Fig. 5a: die erfindungsgemäße Einrichtung zur Frischwasserzufuhr nach Fig. 4 in einer ersten detaillierten Schnitttansicht,
- Fig. 5b: die Einrichtung zur Frischwasserzufuhr nach Fig. 4 in einer zweiten detaillierten Schnitttansicht,
- Fig. 6: die Einrichtung zur Frischwasserzufuhr nach Fig. 4 in einer perspektivischen Detailansicht von oben,
- Fig. 7: die Einrichtung zur Frischwasserzufuhr nach Fig. 4 in einer perspektivischen Ansicht von der Seite,
- Fig. 8: die Einrichtung zur Frischwasserzufuhr nach Fig. 4 in einer perspektivischen Detailansicht von der Seite,
- Fig. 9: die Einrichtung zur Frischwasserzufuhr nach Fig. 4 in einer dritten detaillierten Schnitttansicht,
- Fig. 10: die Einrichtung zur Frischwasserzufuhr nach Fig. 4 in einer teilweisen Schnitttansicht,
- Fig. 11: eine perspektivische Detailansicht der Einrichtung zur Frischwasserzufuhr nach Fig. 4,
- Fig. 12a: eine Gesamtansicht des erfindungsgemäßen Systems zur Grauwasserverwendung mit der erfindungsgemäßen Einrichtung zur Grauwasserspeicherung, der erfindungsgemäßen Einrichtung zur Grauwasserzuleitung und der erfindungsgemäßen Einrichtung zur Frischwasserzufuhr nach Fig. 4,
- Fig. 12b: eine teilweise geschnittene Gesamtansicht des Systems zur Grauwasserverwendung nach Fig. 12a,
- Fig. 13: eine Explosionsdarstellung des Systems zur Grauwasserverwendung nach Fig. 12a,
- Fig. 14: eine weitere Detailansicht der Einrichtung zur Grauwasserspeicherung nach Fig. 1,
- Fig. 15: eine Draufsicht auf die Einrichtung zur Grauwasserspeicherung nach Fig. 1,
- Fig. 16: einen ersten Schnitt durch die Einrichtung zur Grauwasserspeicherung nach Fig. 1,
- Fig. 17: einen zweiten Schnitt durch die Einrichtung zur Grauwasserspeicherung nach Fig. 1,
- Fig. 18a: eine Draufsicht auf das Tankgehäuse der Einrichtung zur Grauwasserspeicherung nach Fig. 1,
- Fig. 18b: einen ersten Schnitt durch das Tankgehäuse nach Fig. 18a,
- Fig. 18c: einen zweiten Schnitt durch das Tankgehäuse nach Fig. 18a,
- Fig. 19a: eine Draufsicht auf den ersten Behälter der Einrichtung zur Grauwasserspeicherung nach Fig. 1,
- Fig. 19b: einen ersten Schnitt durch den ersten Behälter nach Fig. 19a,
- Fig. 19c: einen zweiten Schnitt durch den ersten Behälter nach Fig. 19a und
- Fig. 20: eine Detailansicht der Einrichtung zur Grauwasserspeicherung nach Fig. 1.

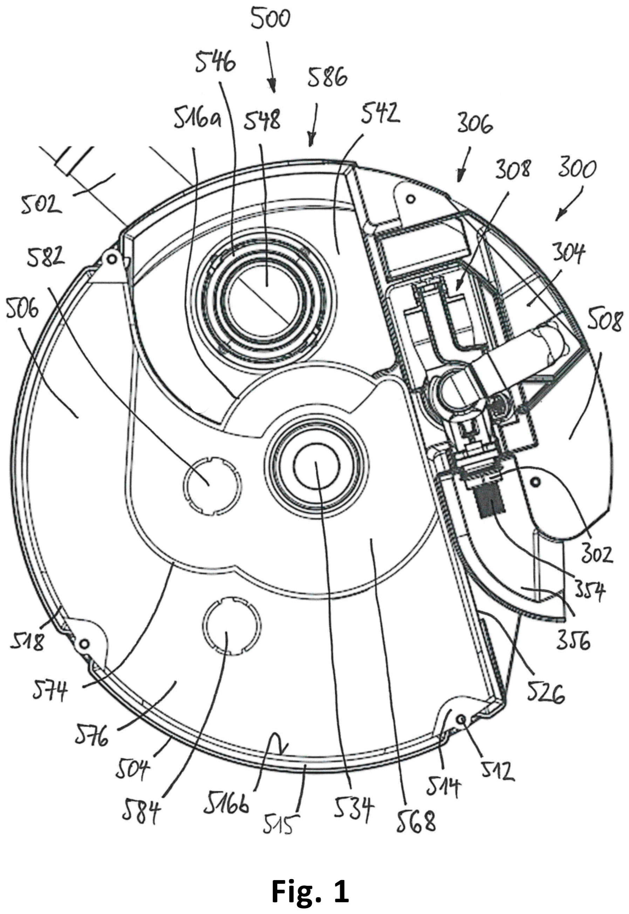

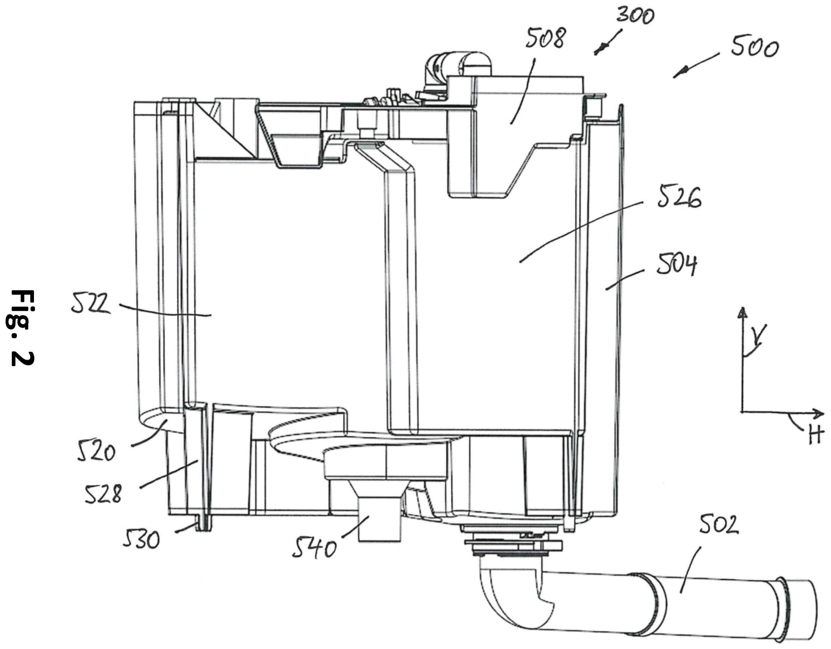

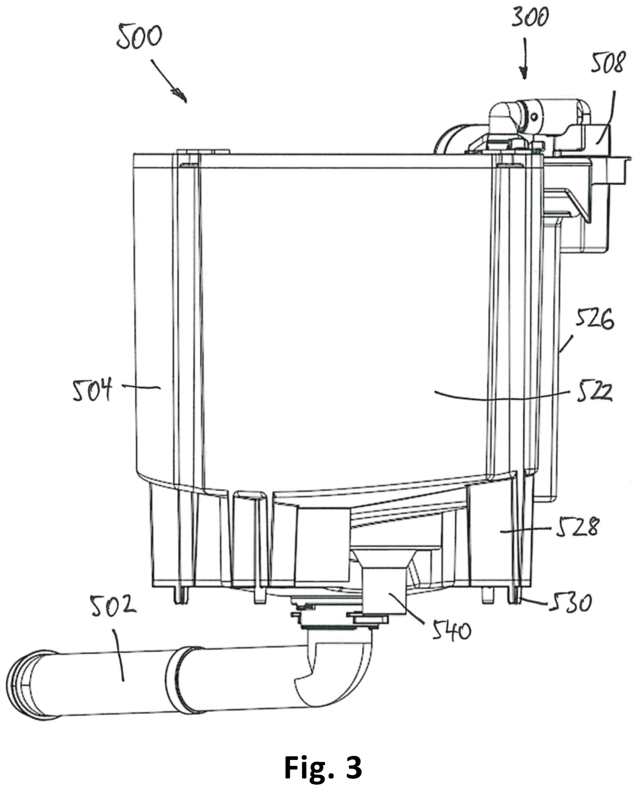

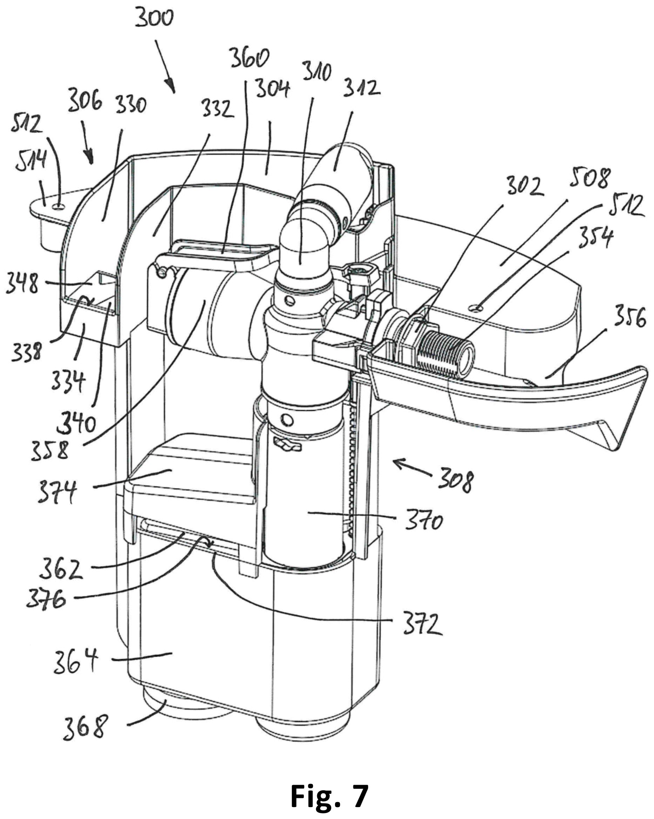

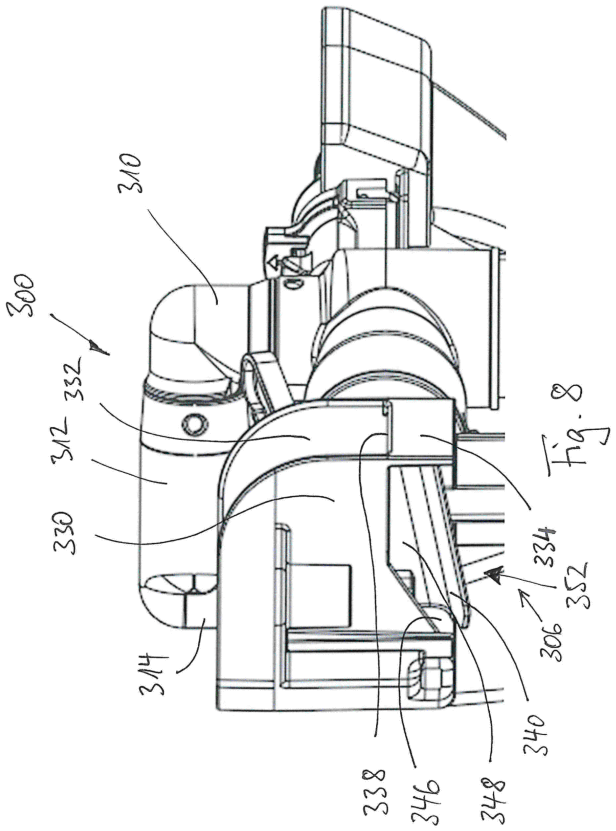

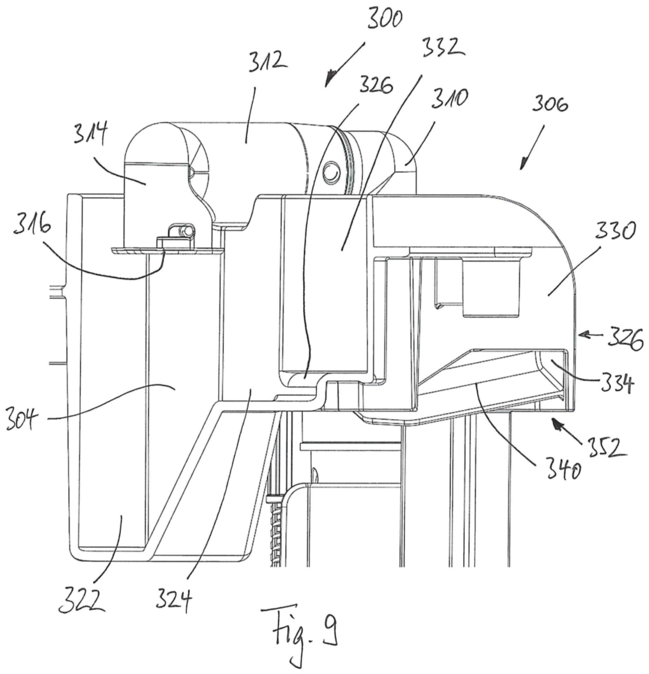

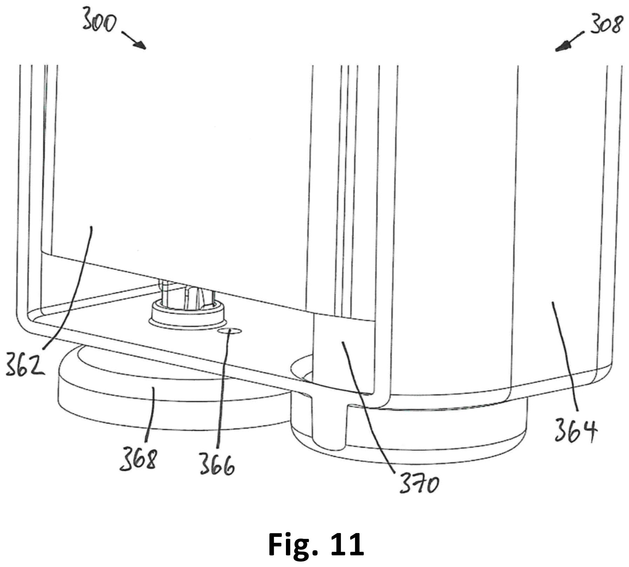

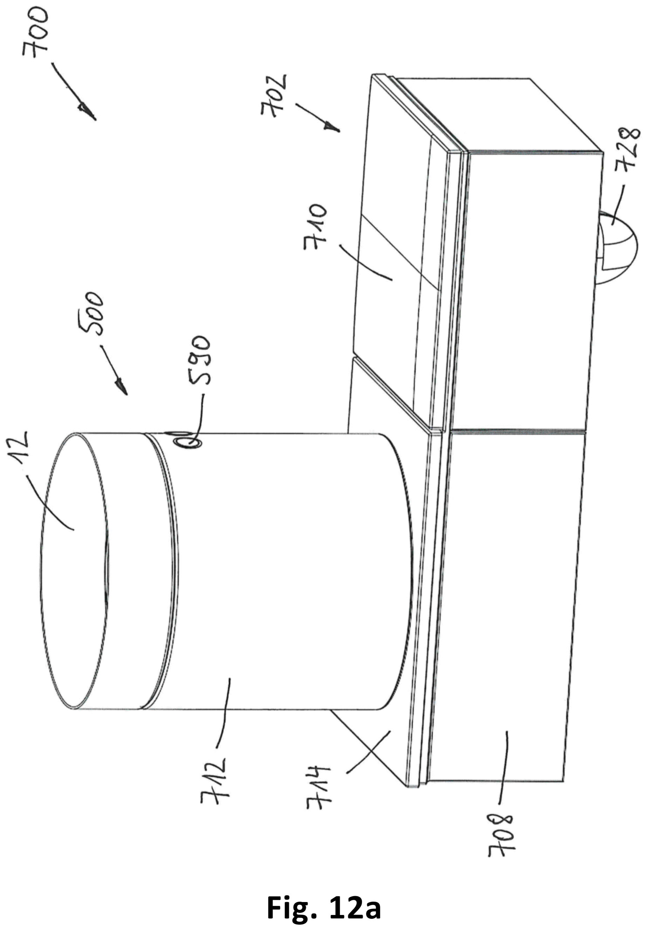

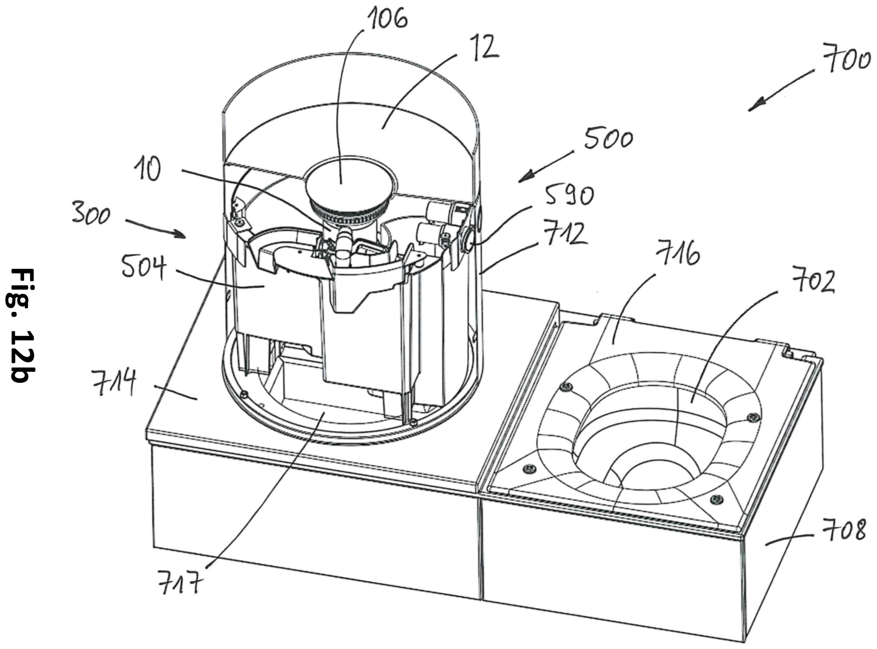

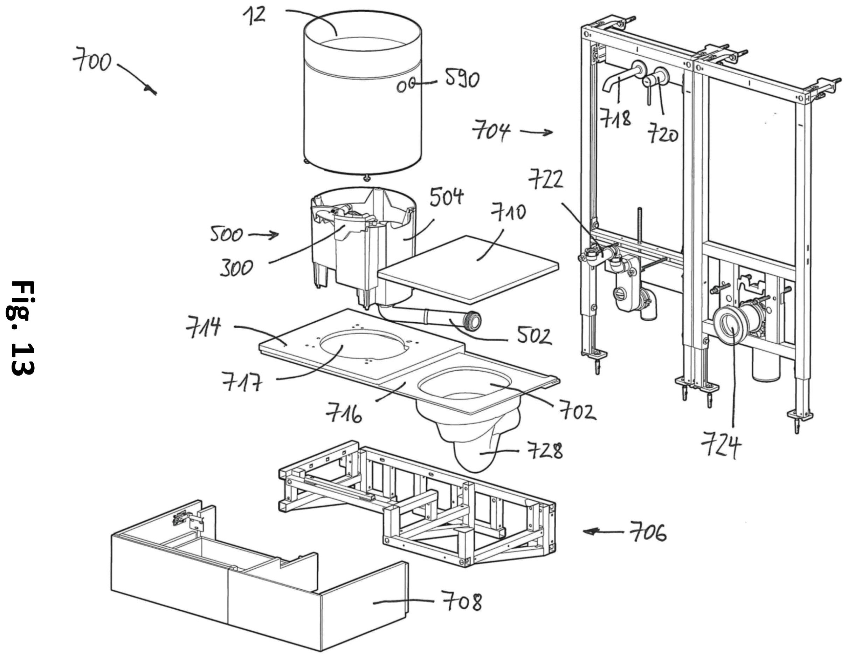

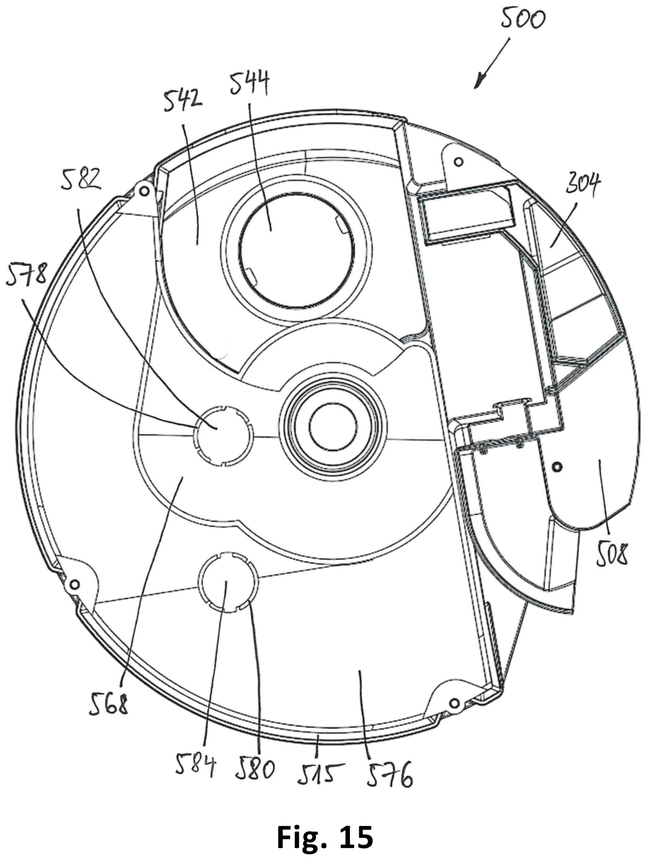

In den Fig. 1 bis 11, 12b bis 15, 17 und 20 ist die erfindungsgemäße Einrichtung 300 zur Versorgung eines Grauwasserbehälters mit Frischwasser aus einem Frischwasseranschluss ("Einrichtung zur Frischwasserzufuhr"), die beispielsweise im Rahmen des erfindungsgemäßen Systems 700 zur Grauwasserverwendung (vgl. Fig. 12a bis 13) zusammen mit der erfindungsgemäßen Einrichtung 500 zur Speicherung von Grauwasser ("Einrichtung zur Grauwasserspeicherung - vgl. Fig. 1 bis 3, 12a bis 20) verwendet wird, in verschiedenen Ansichten gemäß einer bevorzugten Ausgestaltung gezeigt. In Fig. 15 sind zur besseren Übersichtlichkeit nicht alle Elemente der Einrichtung 500 zur Grauwasserspeicherung gezeigt.

Es ist zu erkennen, dass das erfindungsgemäße System 700 zur Grauwasserverwendung neben der erfindungsgemäßen Einrichtung 300 zur Frischwasserzufuhr beispielhaft noch einen Grauwassererzeuger 12 in Form eines Waschbeckens umfasst, die erfindungsgemäße Einrichtung 10 (in Form eines Ablaufs bzw. einer Ablaufarmatur) zur Zuleitung von Grauwasser von dem Grauwassererzeuger 12 zu einem Grauwasserabnehmer in Form eines Grauwasserbehälters 586 ("Einrichtung zur Grauwasserzuleitung"), der die Spülung einer Toilette 702 speist, und die erfindungsgemäße Einrichtung 500 zur Speicherung von Grauwasser in einem Grauwasserbehälter (auch "Tankanordnung" genannt).

Weiterhin ist zu erkennen, dass die erfindungsgemäße Einrichtung 300 zur Frischwasserzufuhr einen Frischwasseranschluss 302, einen Frischwasserbehälter 304 mit einem Ablauf 306 und ein Betätigungsmittel 308 zur Betätigung des Frischwasseranschlusses 302 umfasst.

Genauer gesagt weist der Frischwasseranschluss 302 einen Auslaufbogen 310 auf, der einen in Bezug auf die Horizontale H horizontal verlaufenden Abschnitt 312 und einen in Bezug auf die Vertikale V vertikal verlaufenden Abschnitt 314 aufweist, wobei sich am unteren Ende des vertikalen Abschnitts 314 eine Auslauföffnung 316 befindet.

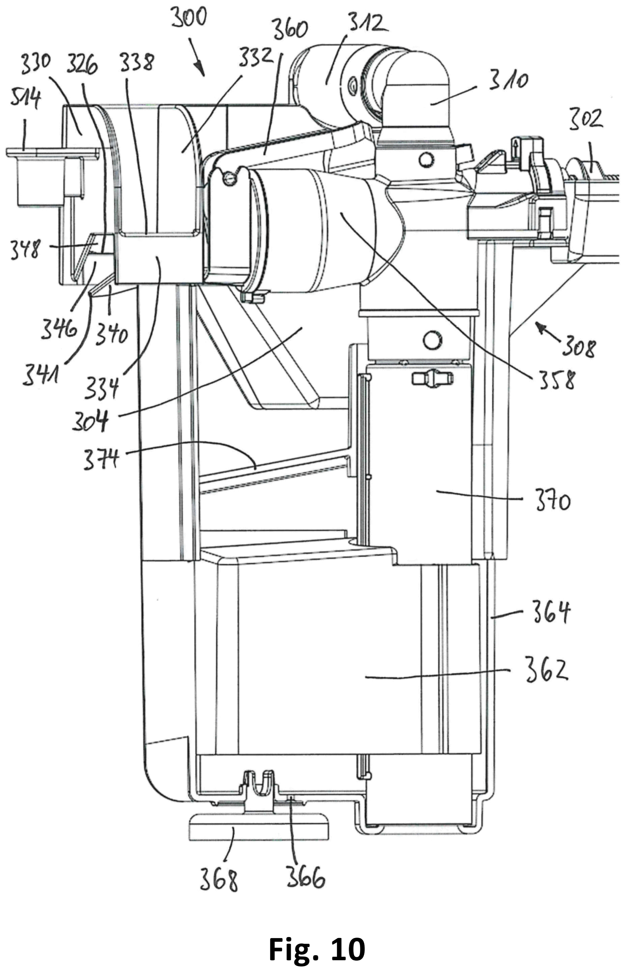

Durch zahlreiche Durchbrechungen 318 (vgl. Fig. 10) wird ein Perlstrahleffekt erzeugt, wodurch eine Geräuschminderung bei der Zufuhr des durch die Auslauföffnung 316 abgegebenen Frischwassers, dass im Normalfall Trinkwasser sein wird, erfolgt.

Zur erleichterten Reinigbarkeit der Auslauföffnung 316 ist diesen von dem Vertikalabschnitt 314 abnehmbar gestaltet, wobei hier eine Clips-Verbindung 320 vorliegt.

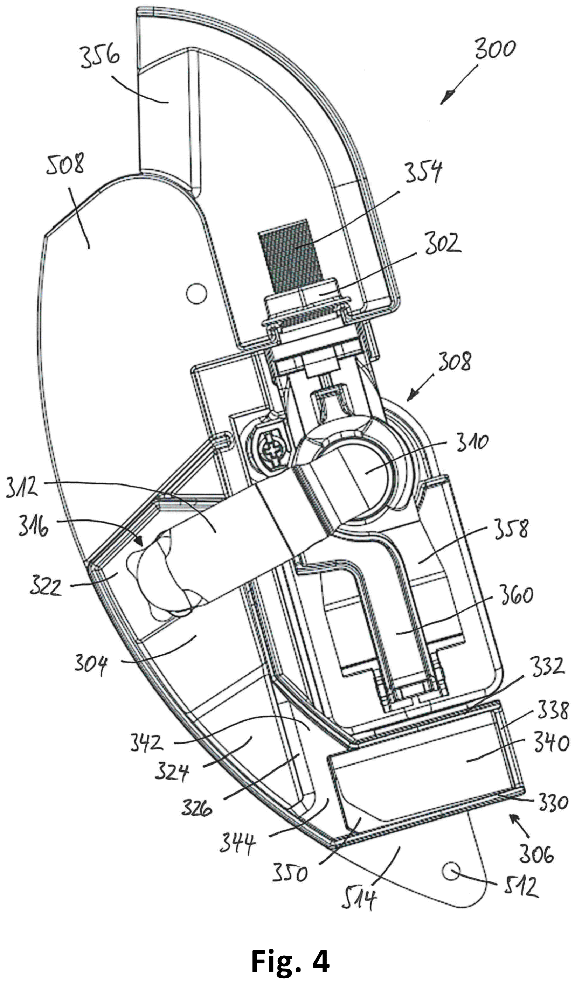

Der Frischwasserbehälter 304 weist in der Draufsicht (vgl. Fig. 1 und 4) eine etwa sichelförmig gebogene Form auf, um sich in die runde Außenform der Tankanordnung 500 einzufügen, an dessen Außenseite sie angeordnet ist.

Der Frischwasserbehälter 304 weist im Bereich der Auslauföffnung 316 einen tieferen Teil 322 auf, an den sich in Strömungsrichtung S ein flacherer Teil 324 anschließt, der von einer Ablaufkante 326 abgeschlossen wird.

Anschließend an die Ablaufkante 326 erstreckt sich der Ablauf 306, der als Spritzschutz und zur Wasserführung eine Seitenwandung 328 aufweist, die mit Ausnahme der Ablaufkante 326 den Ablauf 306 vollständig umgibt. Diese Seitenwandung 328 schließt direkt an die Seitenwandung 329 an, die den Rest des Frischwasserbehälters 304 rings umgibt und den Übertritt von Frischwasser in andere Bereiche der Einrichtung 500 zur Grauwasserspeicherung und des Systems 700 zur Grauwasserverwendung außer durch den Ablauf 306 verhindert.

Diese Seitenwandung 328 umfasst einen ersten vertikalen Abschnitt 330 und einen zweiten vertikalen Abschnitt 332, die zueinander etwa parallel verlaufen. Gegenüberliegend zu der Ablaufkante 326 befindet sich eine Ableitfläche 334 die sich vertikal erstreckt und eine obere Kante 338 aufweist, die eine Überlaufkante 338 bildet.

Innerhalb des Ablaufs 306 befindet sich ein Ablaufschwert 340, dessen unten umlaufende Kante 341 die Abrisskante bildet. Dieses Ablaufschwert 340 ist mit dem Abschnitt 332 der Seitenwandung 328 und auch mit der Ableitfläche 334 verbunden, jedoch nicht mit dem Abschnitt 330 und auch nicht mit der sich an die Ablaufkante 326 anschließende Fläche 342, die sich aus einem ersten direkt an die Ablaufkante 326 anschließenden horizontal verlaufenden Teil 344 und einem zweiten, an den horizontalen Teil 344 sich direkt anschließenden senkrecht verlaufenden Teil 346 stufenförmig zusammensetzt.

Außerdem weist der Abschnitt 330 eine Durchbrechung 348 auf und das Ablaufschwert 340 besitzt in Bezug auf einen Querschnitt des Ablaufs 306 (vgl. Fig. 4) von oben gesehen eine Ausnehmung 350.

Dadurch wird durch die Durchbrechung 348 und die Ausnehmung 350 eine Ablauföffnung 352 gebildet, die von dem senkrechten Teil 346, dem Ablaufschwert 340 und dem Abschnitt 330 begrenzt wird.

Diese Ablauföffnung 352 weist einen größeren Querschnitt auf als die Auslauföffnung 316, wodurch ein Stau im Frischwasserbehälter 304 wirksam verhindert wird.

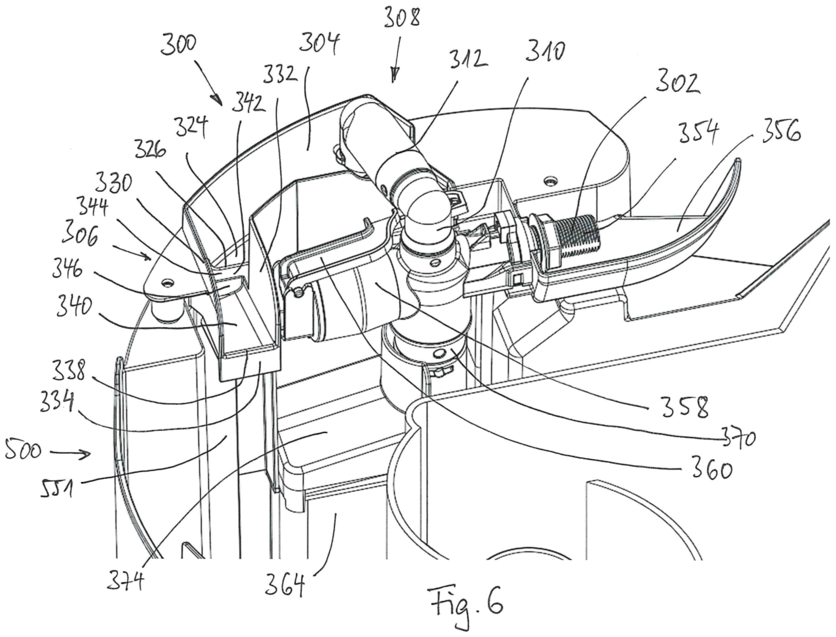

Das Ablaufschwert 340, das die Ablauffläche definiert, weist ausgehend von dem Abschnitt 332 in Richtung zum Abschnitt 330 ein Gefälle nach unten auf. Außerdem weist das Ablaufschwert 340 ausgehend von der Ableitfläche 334 in Richtung zum Teil 346 bzw. zur Ablaufkante 326 in Bezug auf die Horizontale H ein Gefälle von 10° nach unten auf. Dadurch wird das aus der Ablauföffnung 352 austretende Wasser in Richtung zu der Durchbrechung 348 und der Ausnehmung 350 geleitet, so dass es insgesamt in Richtung zu einem Wandabschnitt 351 des Grauwasserbehälters 586 weg von der Betätigungsvorrichtung 546 des Grauwasserbehälters 586 geleitet wird (vgl. Fig. 6). Damit wird der Zufluss von Frischwasser, sei es direkt oder durch Spritzen zu der Betätigungsvorrichtung 546 wirksam verhindert, wodurch dessen Verkalkung unterbunden wird (vgl. Fig. 1).

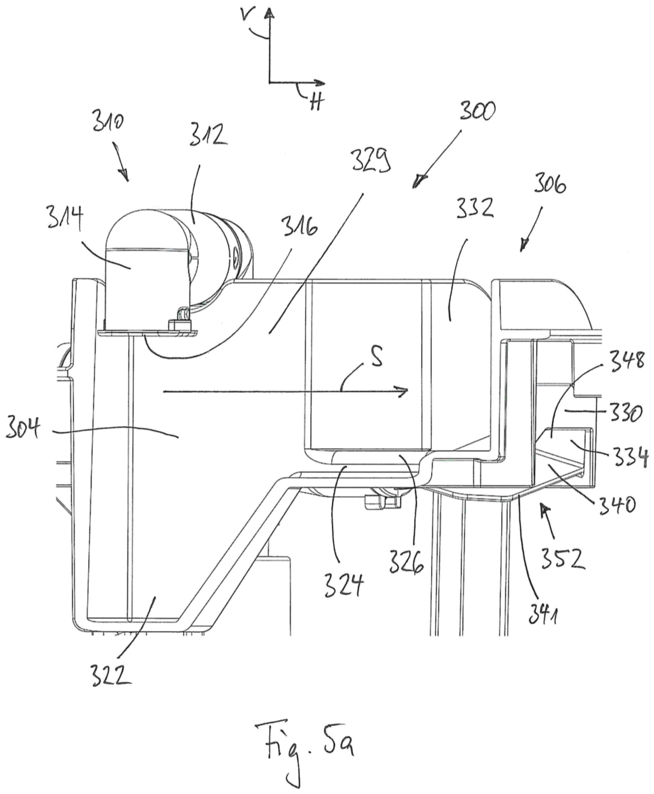

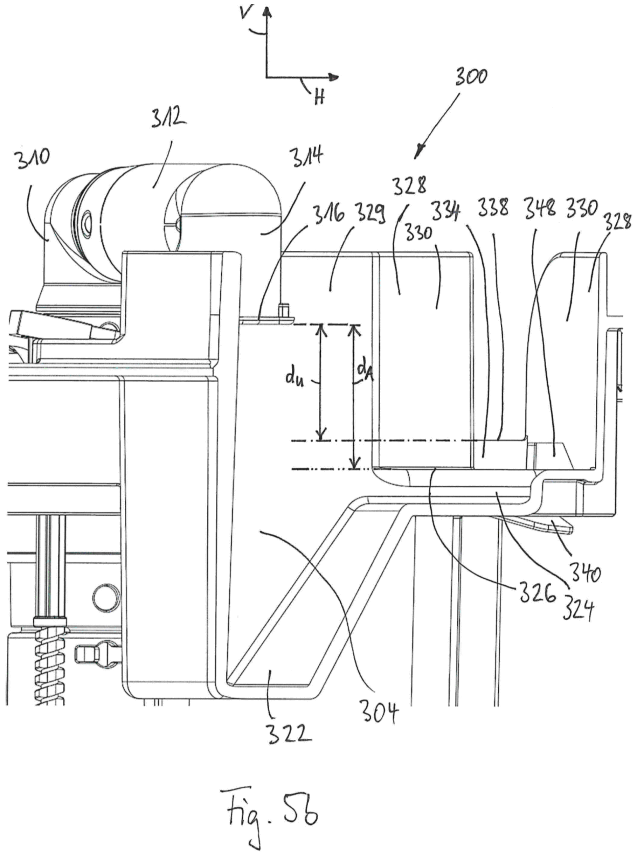

Wie in Fig. 5b gezeigt ist, weist die Ablaufkante 326 in Bezug auf die Auslauföffnung 316 einen vertikalen Abstand d_{A} auf, der mit 29,8 mm größer ist als der vertikale Abstand d_{U} von 23,8 mm zwischen der Überlaufkante 338 und der Auslauföffnung 316.

Durch den Übergang zwischen dem tieferen Teil 322 und dem flacheren Teil 324 sowie auch durch den flacheren Teil 324 selbst besitzt der Frischwasserbehälter 304 bezogen auf die durch die Ablaufkante 326 definierte maximale Füllstandshöhe eine relativ große Wasserfläche (Phasengrenzfläche) in Bezug auf das Füllvolumen des Frischwasserbehälter 304 auf. Genauer gesagt beträgt diese Wasserfläche ca. 25 cm2 und das Volumen beträgt ca. 74 ml. Dadurch wird die Verdunstung im Frischwasserbehälter 304 befördert, was den Vorteil hat, dass ein sequentielles Befüllen des Frischwasserbehälters 304 und nachfolgend des Grauwasserbehälters 586 erfolgt. Das ist dann besonders wünschenswert, wenn ein rein hydro-mechanisches Funktionskonzept besteht, bei dem beispielsweise über Schwimmerventile 308 und oder Rückschlagklappen der Übertritt von Wasser eines Behälters 304 in einen anderen 586 gesteuert wird. Ein durch Verdunstung abgesenkter Füllstand im Frischwasserbehälter 304 fungiert dabei als zusätzliches Verzögerungsglied im Regelmechanismus.

Im Betrieb wird das im Frischwasserbehälter 304 zu viel befindliche Frischwasser stets über die Ablaufkante 326 der Ablauföffnung 352 zugeführt und dort austreten. Der Abstand d_{A} von 29,8 mm zwischen Ablaufkante 326 und Auslassöffnung 316 sorgt dafür, dass eine vollständige Absicherung gegen einen Übertritt von Frischwasser (Kategorie 3) aus dem Frischwasserbehälter 304 in den Frischwasseranschluss 302 Frischwasser (Kategorie 1) vorliegt.

Aber selbst für den unwahrscheinlichen Fall, dass die Ablauföffnung 352 einmal verstopft sein sollte - was durch deren relative großflächige und unregelmäßige Gestaltung im normalen Betrieb nahezu ausgeschlossen sein sollte -, besteht noch die Überlaufkante 338, über die dann das im Frischwasserbehälter 304 zu viel befindliche Frischwasser (Kategorie 3) austreten und direkt in den Grauwasserbehälter 586 übergeleitet werden würde.

Auch diese Überlaufkante 338 weist mit 23,8 mm einen ausreichend großen Abstand d_{U} zur Auslauföffnung 316 auf, so dass der Schutz des Frischwasseranschlusses 302 in jedem Fall gesichert ist.

Der Frischwasseranschluss 302 weist in üblicher Form ein Außengewinde 354 auf, an dem ein nicht gezeigter Schlauch einer Frischwasserzuleitung (beispielsweise von einer Trinkwasserzuleitung eines Haushalts) angeschlossen werden kann. Zur besseren Zuführung des Schlauchs zum Frischwasseranschluss und auch als Überlaufschutz ist ein Schutzkanal 356 vorgesehen.

Das Betätigungsmittel 308 umfasst als Schwimmerventil in üblicher Weise ein Ventil 358, das über eine Hebelmechanik 360 mit einem Schwimmkörper 362 gekoppelt ist, der sich im Grauwasserbehälter 586 befindet.

Wenn der Schwimmkörper 362 auf ein vorgegebenes Niveau im Grauwasserbehälter 586 abgesunken ist, dann wird das Ventil 358 geöffnet und Frischwasser wird vom Frischwasseranschluss 302 kommend durch die Auslauföffnung 316 dem Frischwasserbehälter 304 zugeführt, von wo es nach Überschreiten der Füllstandshöhe über die Ablaufkante 326, die Fläche 342 und das Ablaufschwert 340 durch die Ablauföffnung 352 in den Grauwasserbehälter 586 geleitet wird.

Außerdem besteht ein Behälter 364, der als nach oben offen ausgebildete Wanne gestaltet ist. Diese Wanne 364 weist eine Steuerbohrung 366 auf, in der sich eine vertikal bewegliche Rückschlagklappe 368 befindet, die den Zufluss von Flüssigkeit in den Behälter 364 durch die Steuerbohrung 366 sperrt.

Der Schwimmkörper 362 ist beispielsweise als nach unten offen ausgebildete Wanne gestaltet. Er ist in dem Behälter 364 angeordnet und zugleich verschieblich an einem vertikal sich erstreckenden Pfosten 370 des Betätigungsmittels 308 gelagert.

Eine den Behälter 364 oben rings umgebende Einlaufkante 372 ist auf einem Niveau angeordnet, das unterhalb der maximalen Füllstandshöhe des Grauwasserbehälters 586 liegt. Diese maximale Füllstandshöhe des Grauwasserbehälters 586 wird dabei durch einen Überlauf 548 der Betätigungsvorrichtung 546 des Grauwasserbehälters 586 definiert.

Dadurch fließt das in dem Grauwasserbehälter 586 befindliche Grauwasser erst beim Überschreiten des Niveaus der Einfüllkante 372 über diese in den Behälter 364 ein. Das Einfließen durch die Steuerbohrung 366 wird dagegen durch die Rückschlagklappe 368 verhindert.

Dadurch kann der Behälter 364 nur von oben befüllt werden und die Befüllung durch Frischwasser aus dem Frischwasserbehälter 304 wird durch eine Abdeckkappe 374 verhindert, die die obere Öffnung 376 des Behälter 364 vollständig abschirmt und die sich auf dem Behälter 364 abstützt.

Die Geschwindigkeit des Abfließens von Grauwasser aus dem Behälter 364 wird durch die Steuerbohrung 366 vorgegeben, die so bemessen ist, dass zwischen einer angehobenen, das Ventil 358 abschaltenden Position des Schwimmkörpers 362 und einer soweit im Behälter 364 abgesenkten Position des Schwimmkörpers 362, dass das Ventil 358 geöffnet wird, eine Zeitdauer von 15 s besteht.

Genauer gesagt wird im Betrieb bei einem vollständig gefüllten Grauwasserbehälter 586 und der Betätigung der Betätigungsvorrichtung 546 des Grauwasserbehälters 586 sich der Grauwasserbehälter 586 entleeren, wodurch die Füllstandshöhe im Grauwasserbehälter 586 sukzessive absinkt.

Durch die Steueröffnung 366 wird der schnelle Abfluss von Grauwasser aus dem Behälter 364 dagegen verhindert, wodurch dieses aus dem Behälter 364 nur langsam abfließt und daher der Schwimmkörper 362 weniger schnell absinkt als die Füllhöhe im Grauwasserbehälter 586 absinkt. Auf diese Weise wird zwischen der vollständigen Entleerung des Grauwasserbehälters 586 und dem Schalten des Ventils 358 eine Zeit von 15 s vergehen.

Dadurch besteht im Betrieb des Einrichtung 500 zur Grauwasserspeicherung bzw. des Systems 700 zur Grauwasserverwendung ausreichend Zeit für die Zufuhr von Grauwasser in den Grauwasserbehälter 586, bevor dem Grauwasserbehälter 586 Frischwasser durch die erfindungsgemäße Einrichtung 300 zur Frischwasserzufuhr zugeführt wird. Bei ausreichendem Vorhandensein von Grauwasser bei einem Grauwassererzeuger 12 wird dieses Grauwasser somit immer zuerst in den Grauwasserbehälter 586 überführt, so dass eine optimale Nutzung des anfallenden Grauwassers und zugleich ein maximales Sparen von Frischwasser erfolgen können.

Wenn einem entleerten Grauwasserbehälter 586 dagegen wieder Grauwasser zugeführt wird, verbleit der Schwimmkörper 362 in seiner abgesenkten Schaltposition, bis das Grauwasser über die Einlaufkante 372 übertritt.

Dadurch erfolgt eine Befüllung des Grauwasserbehälters 586 mit Frischwasser bei maximaler und konstanter Geschwindigkeit. Nach dem Übertritt des Grauwasser in den Behälter 364 wird der Schwimmkörper 362 aufgrund des geringen Volumens des Behälters 364 sehr schnell angehoben. Dadurch ist der Zeitraum zwischen vollständiger Öffnung des Ventils 358 und Schließung des Ventils 358 maximal verkürzt, wodurch der Befüllvorgang des Grauwasserbehälters 586 mit Frischwasser nicht nur minimiert, sondern auch die damit verbundene Geräuschentwicklung deutlich verringert werden.

Alternativ zum hier beschriebenen Schwimmerventil 308 könnte beispielsweise auch ein Magnetventil (nicht gezeigt) verwendet werden, das mit einem Füllstandssensor (nicht gezeigt) gekoppelt ist, der den Füllstand im Grauwasserbehälter 586 überwacht. Wenn ein möglichst energieloser Betrieb der Einrichtung 500 zur Grauwasserspeicherung bzw. des Systems 700 zur Grauwasserverwendung ermöglicht werden soll, wird die Verwendung des Schwimmerventils 308 bevorzugt.

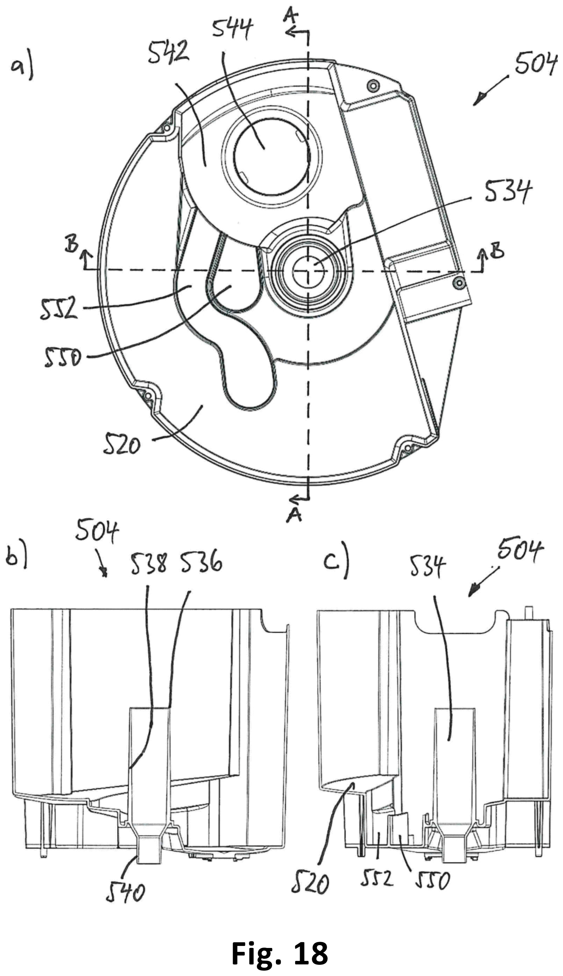

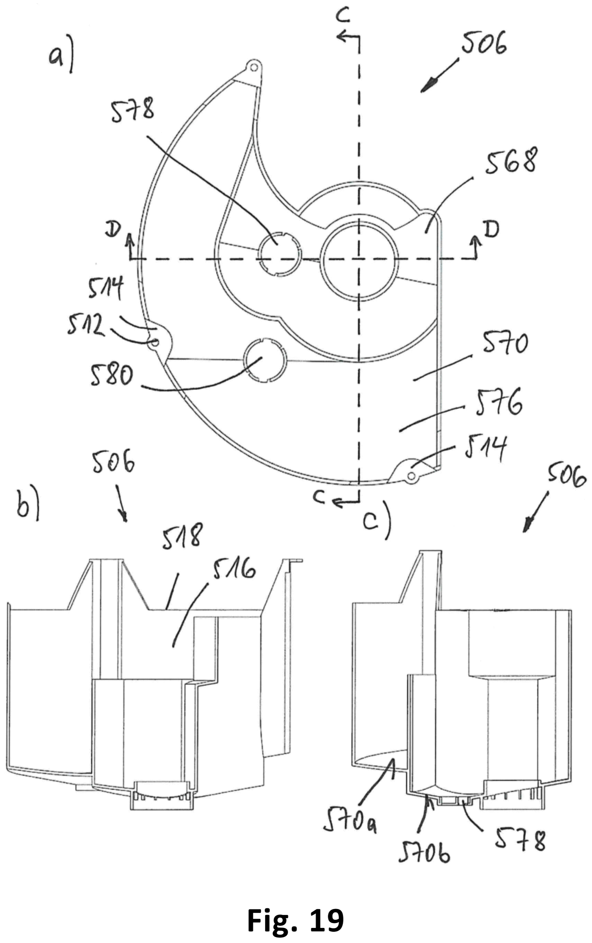

Das erfindungsgemäße System 700 zur Grauwasserverwendung umfasst entsprechend den Fig. 18a, 18b und 19 einen Grauwassererzeuger 12 in Form eines Waschbeckens und einen letztendlichen Grauwasserabnehmer 702 in Form einer Toilette, die erfindungsgemäße Eirichtung 10 zur Zuleitung von Grauwasser von dem Grauwassererzeuger 12 zu der erfindungsgemäßen Einrichtung 500 zur Grauwasserspeicherung, die erfindungsgemäße Einrichtung 300 zur Frischwasserzufuhr und die erfindungsgemäße Einrichtung 500 zur Grauwasserspeicherung.

Es ist zu erkennen, dass das System 700 zur Grauwasserverwendung eine Vorwandinstallation 704 aufweist, an der mit Hilfe des Hilfsrahmens 706 sowohl das Waschbecken 12 als auch die Toilette 702 befestigt sind.

Der Hilfsrahmen 706 weist eine Verblendung 708 auf, die Toilette 702 umfasst einen Deckel 710 und die Einrichtung 500 zur Grauwasserspeicherung ist von einer Hülle 712 umgeben.

Teil der Verkleidung 708 ist eine Abdeckung 714 im Bereich der Hülle 712 und eine Abdeckung 716 im Bereich der Toilette 702.

An der Vorwandinstallation 704 ist in üblicher Weise der Frischwasserzulauf 718 für das Waschbecken 12 angeordnet, der über eine entsprechende Armatur 720 regelbar ist. Weiterhin befindet sich an der Vorwandinstallation 704 ein Auslauf 722 für das vom Waschbecken 12 kommende Grauwasser, das nicht in dem System 700 zur Grauwasserverwendung weiter genutzt wird. Schließlich sind an der Vorwandinstallation eine Frischwasserzuführung (nicht gezeigt), die einerseits mit der Armatur 720 verbunden ist und andererseits mit der Einrichtung 300 zur Frischwasserzufuhr, und ein Auslauf 724 für die Toilette 702 angeordnet.

Die Einrichtung 500 zur Grauwasserspeicherung weist einen Spülbogen 502 auf, der mit der Spülzufuhr (nicht gezeigt) der Toilette 702 verbunden ist. Die Abdeckung 714 weist eine zentrale Durchbrechung 717 zur Durchleitung dieses Spülbogens 502 auf.

Sowohl die Einrichtung 500 zur Grauwasserspeicherung als auch die Hülle 712 sind an der Abdeckung 714 befestigt.

Zur Bedienung des Spülventils 546 der Einrichtung 500 zur Grauwasserspeicherung bestehen Bedienelemente 590.

Die Einrichtung 500 zur Grauwasserspeicherung weist entsprechend den Fig. 1 - 3 und 14 - 21 ein Gehäuse 504 auf, in dem ein erster Einschub 506 und ein zweiter Einschub 508 in Form der erfindungsgemäßen Einrichtung 300 zur Frischwasserzufuhr angeordnet sind. Dabei zeigen die Fig. 18b den Schnitt in der vertikalen Ebene A-A nach Fig. 18a, Fig. 18c den Schnitt in der vertikalen Ebene B-B nach Fig. 18a, Fig. 19b den Schnitt in der vertikalen Ebene C-C nach Fig. 19a und Fig. 19c den Schnitt in der vertikalen Ebene D-D nach Fig. 19a.

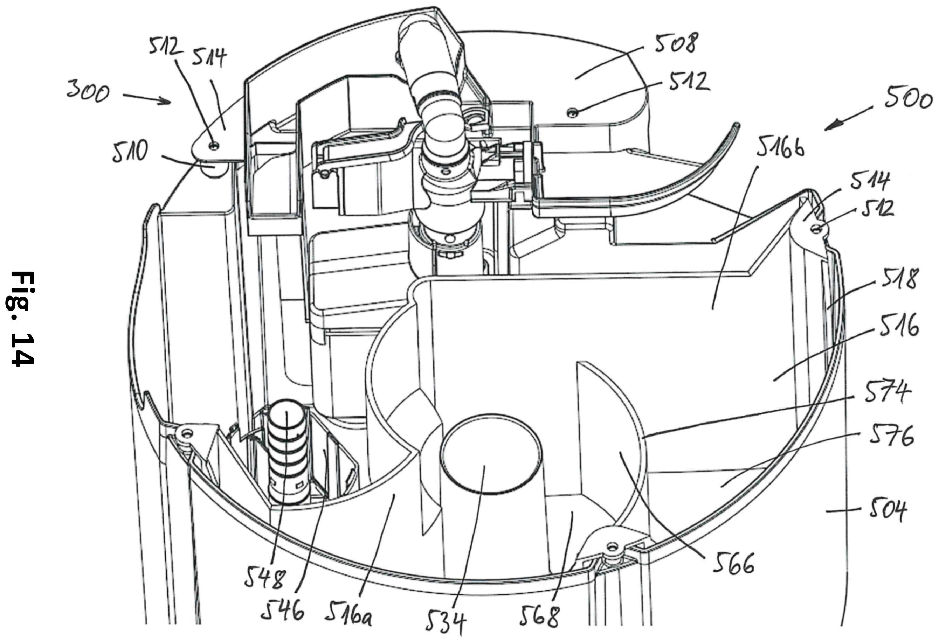

Dabei weist das Gehäuse 504 Stützen 510 auf, auf denen die Einschübe 506, 508 aufgelegt und durch entsprechende Öffnungen 512, die an Auskragungen 514 der Einschübe 506,508 angeordnet sind, verschraubt werden können (vgl. Fig. 14).

Die Einschübe 506, 508 sind so bemessen, dass an den in Bezug auf die Vertikale V oberen Abschnitten des Gehäuses 504 und der Einschübe 506, 508 außer an dem Übergang zwischen Stützen 510 und Auskragungen 514 kein anderer Kontakt zwischen den Einschüben 506, 508 und dem Gehäuse 504 bzw. den Einschüben 506, 508 untereinander besteht. Stattdessen besteht sowohl in Bezug auf die Vertikale V also auch in Bezug auf die Horizontale H jeweils eine Beabstandung 515, die als Luftspalt ausgebildet ist.

Flüssigkeit, die sich in dem ersten Einschub 506 befindet und deren vertikale Wandung 516 innen hochkriecht, wird daher an der oberen Kante 518 umgelenkt und außen an der Wandung 516 wieder herunterkriechen, von wo sie zur Innenseite des Bodens 520 des Gehäuse 504 und damit in das Gehäuse 504 gelangt.

Flüssigkeit, die sich in dem Gehäuse 504 befindet, kann durch die Beabstandung 515 des zweiten Einschubs 508 von der Innenseite der vertikalen Wandung 522 des Gehäuses 504 nicht zu dem Frischwasserbehälter 304 gelangen.

Dadurch wird ein Übertritt von Grauwasser durch Kriechen in den Frischwasserbehälter 304 wirksam verhindert.

Im Bereich des zweiten Einschubs 508 weist das Gehäuse 504 einen seitlichen Rücksprung 526 auf, wodurch sich ein großer Teil des zweiten Einschubs 508 außerhalb der vertikalen Wandung 522 des Gehäuses 504 befindet.

Weiterhin weist das Gehäuse 504 Füße 528 auf, die unten in Auflagepunkten 530, beispielsweise in Form von Dornen enden, die Öffnungen 532 aufweisen. Dadurch kann das Gehäuse 504 an der Abdeckung 714 befestigt werden.

Wie am besten in den Fig. 18b und 18c zu erkennen ist, weist das Gehäuse einen zentralen Überlauf 534 auf, der eine obere Überlaufkante 536, ein Überlaufrohr 538 und einen Überlaufanschluss 540 aufweist. Der Überlaufanschluss 540 wird in üblicher Weise durch die Ausnehmung 717 mit dem Auslauf 722 verbunden.

Das Gehäuse 504 besitzt eine Vertiefung 542, an deren tiefsten Punkt eine Öffnung 544 besteht, in der ein dem Fachmann bekanntes Spülventil 546 mit einem Überlauf 548 angeordnet ist. Dieses Spülventil 546 ist zur besseren Verdeutlichung in den Fig. 15 - 17 nicht gezeigt und in Fig. 14 nicht vollständig gezeigt.

Das Gehäuse 504 besitzt an seinem Boden 520 zwei oben offene Kanäle 550, 552, die seitlich in die Vertiefung 542 münden. Ausgehend von dem ersten Kanal 550 schließt sich innerhalb der Vertiefung eine vertikal aufstrebende Wandung 554 an, die zusammen mit der inneren Bodenfläche 556 und der inneren Seitenfläche 558 einen Grauwasserführungskanal 560 bildet, der sich in einem azimutalen Winkel im Bereich zwischen 60° und 360°, hier konkret ca. 180°, um das Spülventil 546 herum erstreckt, wie am besten in Fig. 21 zu erkennen ist. Die Wand 554 könnte teleskopierbar ausgebildet sein, um die Verzögerungszeit einstellen zu können (nicht gezeigt).

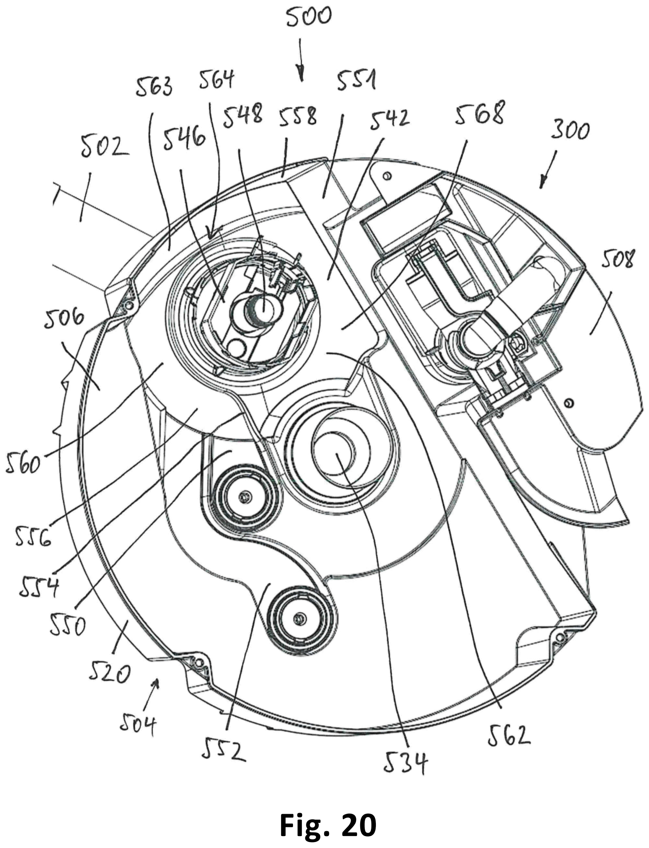

Dieser Grauwasserführungskanal 560 ist der Übersichtlichkeit halber nur in Fig. 20 gezeigt.

Der direkte Zulauf von Flüssigkeit aus den beiden Kanälen 550, 552 zum Bodenventil 546 ist damit im Bereich des Grauwasserführungskanals 560 verhindert und die Flüssigkeit kann somit erst nach Durchlaufen des Grauwasserführungskanal 560 und Erreichen des Zuflussbereichs 562 direkt zum Spülventil 546 fließen.

Es ist auch zu erkennen, dass die innere Seitenfläche 558 im Bereich des Spülbogens 502 eine Einwölbung 563 aufweist, die zusammen mit der Wand 554 eine Einschnürung 564 in dem Grauwasserführungskanal bewirkt.

Während des Spülvorgangs selbst wird durch die ersten Verzögerungsmittel 560 verhindert, dass schon während des Spülens Grauwasser aus dem ersten Behälter 506 zu früh in den zweiten Behälter 586 übertritt und dort mit weggespült wird. Stattdessen wird entsprechend in den zweiten Behälter 586 eintretendes Grauwasser aus dem ersten Behälter 506 im Grauwasserführungskanal 560 durch den hydrostatischen Druck das im zweiten Behälter 586 noch befindliche Grauwasser gehalten und gelangt nicht in merklichen Mengen zur Öffnung 544.

Die Einschnürung 564 bewirkt ein fast vollständiges Halten des Grauwassers, wobei beim Spülvorgang dennoch der Grauwasserkanal 560 mit entleert werden kann. Alternativ zu einer solchen Verengung in Form der Einschnürung 564 ist allerdings auch die Ausbildung des Grauwasserführungskanals mit einem Verschluss in Strömungsrichtung möglich. Dazu Alternativ könnte die Wand 554 direkt an der Einwölbung 563 anliegen und so einen Verschluss des Grauwasserführungskanals 560 bewirken, wobei dann aber im Grauwasserführungskanal 560 beim Spülvorgang eine Restmenge verbliebe.

Der erste Einschub 506 bildet einen ersten Behälter ("Zwischenspeicherbehälter") der Einrichtung 500 zur Grauwasserspeicherung. Er weist neben seiner äußeren Wandung 516 auch eine innere Wandung 566 auf, die zusammen einem Wandabschnitt 516a der äußeren Wandung 516 rings um den Überlauf 534 einen ersten Bereich 568 des ersten Behälter 506 bildet.

Dieser erste Bereich 568 wird an seiner Unterseite durch den Boden 570 des Einschubs 506 begrenzt. Der Boden 570 weist eine Öffnung 572 auf, durch die der Überlauf 534 geführt ist, wobei zwischen Überlaufrohr 538 und der Öffnung 572 eine nicht gezeigte Dichtung in Form eines Dichtrings bestehen kann, so dass keine Flüssigkeit aus dem ersten Bereich 568 heraus, am Überlaufrohr 538 herunter in das Gehäuse 504 gelangen kann.

Die als Überlaufkante 574 gestaltete obere Kante der inneren Wandung 566 weist eine solche vertikale Höhe über dem Boden 570 auf, dass in dem ersten Bereich 568 ein Flüssigkeitsvolumen von 1,5 L bis 2 L gefasst werden kann, bevor die im ersten Bereich 568 befindliche Flüssigkeit über die Überlaufkante 574 in den zweiten Bereich 576 übertritt, der zwischen der inneren Wandung 566 und dem Wandabschnitt 516b im Zusammenhang mit dem Boden 570 gebildet wird.

Das im ersten Bereich 568 gefasst Volumen von 1,5 L bis 2 L entspricht der erfahrungsgemäßen Menge Flüssigkeit, die bei einer durchschnittlichen Handwäsche im Waschbecken 12 anfällt.

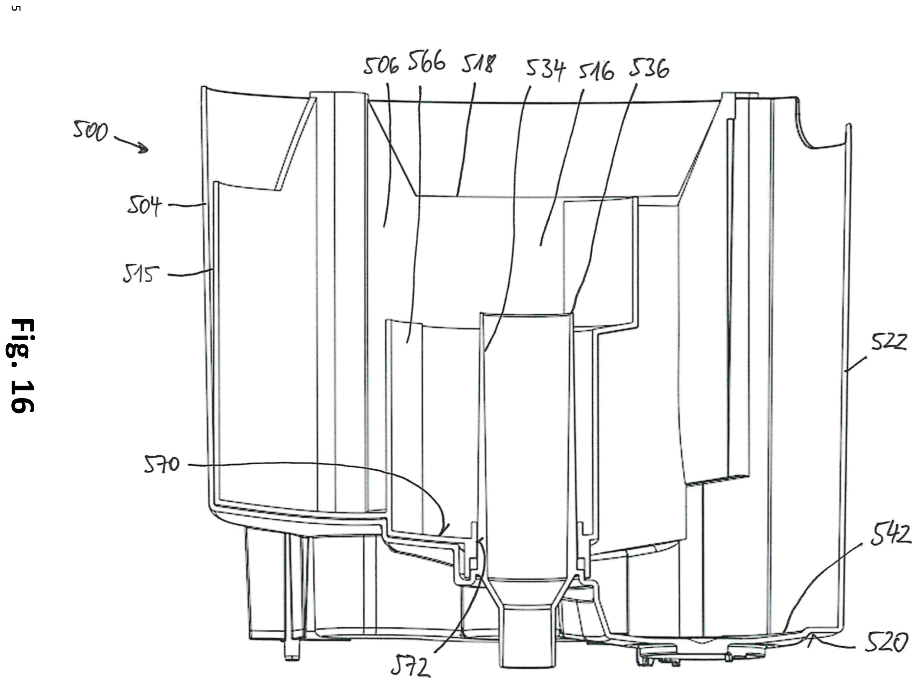

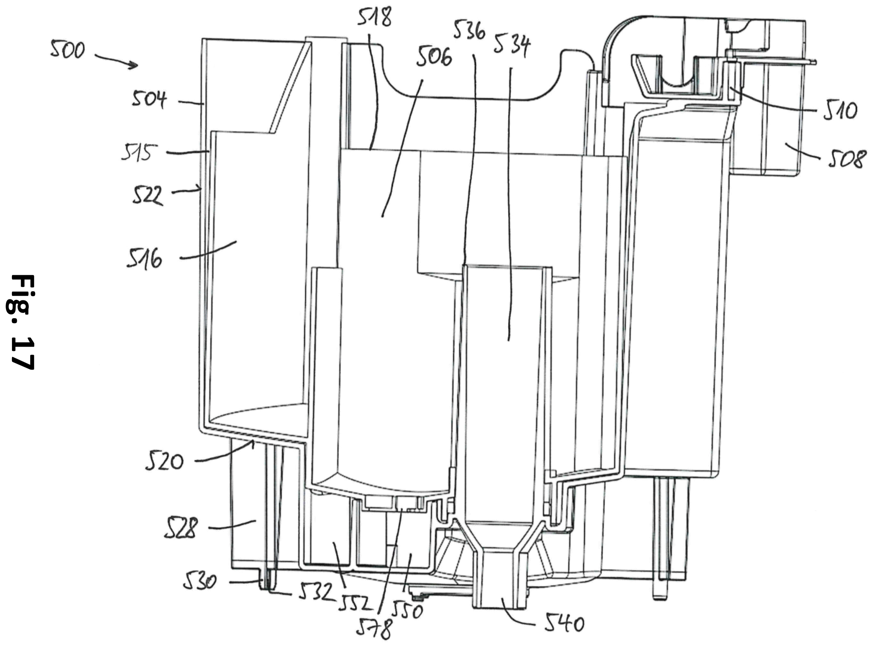

Die Wandabschnitte 516a, 516b erstrecken sich mit ihrer oberen Kante 518 2 cm bis 10 cm vertikal über die Überlaufkante 536 (vgl. Fig. 16, 17) hinaus und die Überlaufkante 536 erstreckt sich 1 cm bis 5 cm vertikal über die innere Wandung 566 hinaus.

Dadurch wird Flüssigkeit, die durch die Einrichtung 10 zur Zuleitung von Grauwasser dem ersten Bereich 568 zugeführt wird, diesen ersten Bereich 568 als erstes vollständig füllen, bevor die im ersten Bereich 568 befindliche Flüssigkeit über die Überlaufkante 574 in den zweiten Bereich 576 des ersten Behälters 506 übertritt. Der Abfluss von Flüssigkeit in den Überlauf 534 wird nur erfolgen, wenn das Flüssigkeitsniveau in dem ersten Behälter 506 höher steht als die Überlaufkante 536.

Sowohl im ersten Bereich 568 als auch im zweiten Bereich 576 befinden sich Öffnungen 578, 580 (vgl. Fig. 15 und Fig. 19), die über den Kanälen 550 bzw. 552 angeordnet sind (vgl. Fig. 15). In den Öffnungen 578, 580 sind Rückschlagventile 582, 584 angeordnet, die die Öffnungen 578, 580 in Richtung zu den Kanälen 550, 552 offenhalten, jedoch von den Kanälen 550, 552 in die Bereiche 568 bzw. 576 sperren.

Im Bereich der Vertiefung 542 wird durch die vertikale Wand 522 des Gehäuses 504, den Wandabschnitt 516a und die Bodenfläche 556 der Vertiefung 542 ein Volumen abgegrenzt, das den zweiten Behälter ("Spülbehälter") 586 bildet.

Zwischen dem Boden 570 des Einschubs 506 und dem Boden 520 des Gehäuses 504 kann eine Abdichtung (nicht gezeigt) bestehen, die dafür sorgt, dass Grauwasser der Vertiefung 542 und damit dem zweiten Behälter 586 nur aus den Öffnungen 578, 580 über die Kanäle 550, 552 zugeführt werden kann.

Die Öffnungen 578, 580 bilden zusammen mit den Rückschlagventilen 582, 584, den Kanälen 550, 552 und dem Grauwasserführungskanal die Schnittstelle zur fluiden Kommunikation des ersten Behälters 506 mit dem zweiten Behälter 586.

Der Boden 570a im ersten Bereich 568 liegt um 4 cm bis 8 cm tiefer als der Boden 570b im zweiten Bereich 576 und der Boden 570a liegt um 4 cm bis 8 cm höher als die Vertiefung 542.

Außerdem ist die vertikale Höhe des ersten Bereichs 568 10 cm bis 20 cm im Vergleich zum repräsentativen, kreis-äquivalenten Durchmesser für das Volumen des ersten Behälters 506 von 1,5 L bis 2 L relativ hoch, so dass ein ausreichend großer Schweredruck für die im ersten Bereich 568 befindliche Flüssigkeit besteht, in den zweiten Behälter 586 mit der Vertiefung 542 überzutreten.

Durch die Abgrenzung des ersten Bereichs 568 vom zweiten Bereich 576 wird eine stetige Befüllung des zweiten Behälters 586 mit einer maximalen Menge Grauwasser sichergestellt, weil auch bei wenig vorhandenem Grauwasser im ersten Behälter 506 Grauwasser aus dem ersten Bereich 568 zuverlässig in den zweiten Behälter 586 übertragen wird.

Der zweite Bereich 576 fasst eine Flüssigkeitsmenge von 2,8 L, wodurch der erste Behälter 506 ein Gesamtvolumen von 4,5 L aufweist. Der zweite Behälter 586 fasst ebenfalls eine Menge von 4,5 L. Wenn der erste Behälter größer ausgebildet werden würde, dann wären auch mehrere Befüllungen des zweiten Behälters 586 möglich.

Das Grauwasser wird durch die nochmals erhöhte Lage des zweiten Bereichs 576 über der Bodenfläche 556 des zweiten Behälters 586 leicht in den zweiten Behälter 586 bis zu einer maximalen Füllhöhe mit Grauwasser gefüllt, die durch die vertikale Lage der Überlaufkante 536 definiert wird. Wenn gerade kein Grauwasser aus dem Waschbecken 12 nachläuft, dann ergibt sich durch Absinken des Grauwasserstandes im ersten Behälter 506 natürlich ein entsprechend geringeres Füllstandsniveau im zweiten Behälter 586.

Das maximale Füllstandsniveau im zweiten Behälter 586 wird durch die vertikale Lage der Überlaufkante 588 des Überlaufs 548 im Spülventil 546 definiert. Diese vertikale Lage ist ca. 4 cm höher als die vertikale Lage der Überlaufkante 536 des zentralen Überlaufs 534, wodurch sicher gestellt wird, dass auch bei einem hohen Grauwasseraufkommen am Waschbecken 12 das überschüssige Grauwasser stets über den zentralen Überlauf 534 abfließt und nicht durch den Spülbogen 502 in die Toilette 702, was zu einer Verschmutzung der Toilette führen kann.

Der genaue Aufbau und die Wirkungsweise dieser Einrichtung 500 zur Grauwasserspeicherung kann der taggleich eingereichten Gebrauchsmusteranmeldung DE 20 2025 101 378.9 der Anmelderin "Einrichtung zur Speicherung von Grauwasser" entnommen werden, deren diesbezüglicher Inhalt hiermit vollumfänglich durch Verweis einbezogen wird.

Aus der vorstehenden Darstellung ist deutlich geworden, dass mit der vorliegenden Erfindung eine Lösung geschaffen wurde, die dahingehend Verbesserungen bringt, dass die Zufuhr mit Frischwasser zu einem Grauwasserbehälter 586 gefahrlos so erfolgt, dass eine Verunreinigung des Frischwassers mit Grauwasser wirksam verhindert wird. Dies wird dadurch erreicht, dass für die Frischwasserzufuhr zum Grauwasserhehälter 586 eine Kaskade mit mehreren hydraulischen Sprüngen in Form von vertikalen Versätzen 316, 304, 326, 586 besteht. Dabei ist die Einrichtung 300 zur Frischwasserzufuhr konstruktiv einfach aufgebaut und kostengünstig herstellbar. Außerdem ist sichergestellt, dass die Zufuhr mit Frischwasser nur dann erfolgt, wenn sie unbedingt notwendig ist.

### Bezugszeichenliste

- 10: bevorzugte Ausgestaltung der erfindungsgemäßen Einrichtung zur Zuleitung von Grauwasser von dem Grauwassererzeuger 12 zu einem Grauwasserabnehmer in Form eines Grauwasserbehälters 586, Ablauf, Ablaufarmatur
- 12: Grauwassererzeuger, Waschbecken
- 300: bevorzugte Ausgestaltung der erfindungsgemäßen Einrichtung zur Frischwasserzufuhr
- 302: Frischwasseranschluss
- 304: Frischwasserbehälter
- 306: Ablauf
- 308: Betätigungsmittel zur Betätigung des Frischwasseranschlusses 302, Schwimmerventil
- 310: Auslaufbogen
- 312: horizontal verlaufender Abschnitt
- 314: vertikal verlaufender Abschnitt
- 316: Auslauföffnung
- 318: Durchbrechungen
- 320: Clips-Verbindung
- 322: tieferer Teil des Frischwasserbehälters 304
- 324: flacherer Teil des Frischwasserbehälters 304
- 326: Ablaufkante
- 328: Seitenwandung
- 329: Seitenwandung
- 330: erster vertikaler Abschnitt der Seitenwandung 328
- 332: zweiter vertikaler Abschnitt der Seitenwandung 328
- 334: Ableitfläche
- 338: obere Kante der Ableitfläche 334, Überlaufkante
- 340: Ablaufschwert, Ablauffläche
- 341: Abrisskante
- 342: Fläche
- 344: horizontaler Teil der Fläche 342
- 346: senkrechter Teil der Fläche 342
- 348: Durchbrechung
- 350: Ausnehmung
- 352: Ablauföffnung
- 354: Außengewinde
- 356: Schutzkanal
- 358: Ventil
- 360: Hebelmechanik
- 362: Schwimmkörper
- 364: Behälter
- 366: Steuerbohrung
- 368: Rückschlagklappe
- 370: Pfosten
- 372: Einlaufkante
- 374: Abdeckkappe
- 376: Öffnung des Behälter 364
- 500: bevorzugte Ausgestaltung der erfindungsgemäßen Einrichtung zur Speicherung von Grauwasser in einem Grauwasserbehälter
- 502: Spülbogen
- 504: Gehäuse, Tankgehäuse
- 506: erster Einschub, erster Behälter, "Zwischenspeicherbehälter"
- 508: zweiter Einschub, erfindungsgemäße Einrichtung 300 zur Frischwasserzufuhr
- 510: Stützen
- 512: Öffnungen
- 514: Auskragungen
- 515: Beabstandung zwischen dem Gehäuse 504 und den Einschüben 506, 508
- 516: vertikale Wandung
- 516a: Wandabschnitt der Wandung 516
- 516b: Wandabschnitt der Wandung 516
- 518: obere Kante
- 520: Bodens des Gehäuses 504
- 522: vertikale Wandung des Gehäuses 504
- 526: seitlicher Rücksprung
- 528: Füße
- 530: Auflagepunkt, Dorn
- 532: Öffnungen
- 534: zentraler Überlauf
- 536: Überlaufkante
- 538: Überlaufrohr
- 540: Überlaufanschluss
- 542: Vertiefung
- 544: Öffnung
- 546: Spülventil
- 548: Überlauf des Spülventils 546
- 550, 552: Kanäle
- 551: Wandabschnitt des zweiten Behälters 586
- 554: vertikal aufstrebende Wandung
- 556: innere Bodenfläche
- 558: inneren Seitenfläche
- 560: Grauwasserführungskanal, erste Verzögerungsmittel
- 562: Zuflussbereich des Spülventils 546
- 563: Einwölbung der inneren Seitenfläche 558
- 564: Einschnürung des Grauwasserführungskanals 560
- 566: innere Wandung
- 568: erster Bereich des ersten Behälters 506
- 570: Boden des Einschubs 506
- 572: Öffnung
- 574: Überlaufkante, obere Kante der inneren Wandung 566
- 576: zweiter Bereich des ersten Behälters 506
- 578, 580: Öffnungen
- 582, 584: Rückschlagventile
- 586: zweiter Behälter, "Spülbehälter", "Spültank"
- 588: Überlaufkante des Überlaufs 548
- 590: Bedienelemente für Toilette 702
- 700: bevorzugte Ausgestaltung des erfindungsgemäßen Systems zur Grauwasserverwendung
- 702: Grauwasserabnehmer, Toilette
- 704: Vorwandinstallation
- 706: Hilfsrahmen
- 708: Verblendung
- 710: Deckel der Toilette 702
- 712: Hülle
- 714: Abdeckung
- 716: Abdeckung
- 717: zentrale Durchbrechung der Abdeckung 714
- 718: Frischwasserzulauf
- 720: Armatur des Frischwasserzulaufs
- 722: Auslauf
- 724: Auslauf für die Toilette 702
- 726: Überlaufkanal aus dem ersten Behälter 506 in den zentralen Überlauf 534
- 728: Siphon für Toilette 702
- d_{A}: vertikaler Abstand zwischen Ablaufkante 326 und Auslauföffnung 316
- d_{U}: Abstand zwischen Überlaufkante 338 und Auslassöffnung 316
- H: Horizontale
- S: Strömungsrichtung
- V: Vertikale

## Patentansprüche

1. Einrichtung (300) zur Versorgung eines Grauwasserbehälters (586) mit Frischwasser aus einem Frischwasseranschluss (302), wobei der Frischwasseranschluss (302) eine Auslauföffnung (316) aufweist, **dadurch gekennzeichnet, dass** in Strömungsrichtung (S) des Frischwassers nach dem Frischwasseranschluss (302) ein Frischwasserbehälter (304) zur Zwischenspeicherung des Frischwassers besteht, der mit dem Frischwasseranschluss (302) verbunden ist.

2. Einrichtung (300) nach Anspruch 1, **dadurch gekennzeichnet,**
**dass** der Frischwasseranschluss ein Trinkwasseranschluss (302) ist und/oder
**dass** der Frischwasserbehälter (304) zwischen Frischwasseranschluss (302) und dem Grauwasserbehälter (586) angeordnet ist und/oder
**dass** in Strömungsrichtung (S) des Frischwassers nach dem Frischwasseranschluss (302) ein oder mehrere hydraulische Sprünge (316, 304, 326, 586) bestehen, wobei bevorzugt in den Sprüngen vertikale Versätze (316, 304, 326, 586) der Frischwasserströmung bestehen,
und/oder
**dass** der Frischwasserbehälter (304) und der Grauwasserbehälter (586) jeweils eigene Behälterwände (328, 329, 522) aufweisen, die zumindest bereichsweise voneinander beabstandet (515) angeordnet sind, wobei bevorzugt ein Luftspalt (515) zwischen den Behälterwänden (328, 329, 522) besteht, und/oder
**dass** eine Wandung (328, 329) besteht, die verhindert, dass Frischwasser aus dem Frischwasseranschluss (302) unter Umgehung des Frischwasserbehälters (304) in den Grauwasserbehälter (586) gelangen kann, und/oder
**dass** der Grauwasserbehälter (586) und der Frischwasserbehälter (304) miteinander verbunden sind, bevorzugt in einem gemeinsamen Gehäuse (504) angeordnet sind, und/oder
**dass** der Frischwasserbehälter (304) in Bezug auf eine maximale Füllstandshöhe des Frischwassers ein Volumen im Bereich 10 ml bis 300 ml, bevorzugt im Bereich 40 ml bis 200 ml, insbesondere im Bereich 60 ml bis 80 ml aufweist und/oder
**dass** der Grauwasserbehälter (586) für die Spülung eines Sanitärgegenstandes (702), bevorzugt einer Toilette (702), eines Urinals oder dgl. bestimmt ist, und/oder
**dass** der Frischwasserbehälter (304) eine freie Wasseroberfläche von zumindest 5 cm2 bis cm2, bevorzugt von zumindest 10 cm2 bis 80 cm2 und insbesondere von zumindest 20 cm2 bis 50 cm2 aufweist.

3. Einrichtung (300) nach Anspruch 1 oder 2, **dadurch gekennzeichnet,**
**dass** die Auslauföffnung (316) vertikal nach unten auf eine Wasseroberfläche im Frischwasserbehälter (304) weist, wobei die Auslauföffnung (316) bevorzugt an einem Auslaufbogen (310) angeordnet ist, wobei der Auslaufbogen (310) insbesondere ein in einer vertikalen Ebene um 90° gebogener Auslaufbogen (310) ist, und /oder
**dass** die Auslauföffnung (316) zumindest 5 mm, bevorzugt zumindest 10 mm, insbesondere zumindest 20 mm oberhalb einer maximalen Füllstandshöhe des Frischwasserbehälters (304) angeordnet ist.

4. Einrichtung (300) nach einem der vorherigen Ansprüche, **dadurch gekennzeichnet, dass** der Frischwasserbehälter (304) einen Ablauf (306) mit einer vertikal oberen Ablaufkante (326) und einer vertikal unteren Abrisskante (341) aufweist, wobei das Frischwasser über den Ablauf (306) dem Grauwasserbehälter zuführbar ist.

5. Einrichtung (300) nach Anspruch 4, **dadurch gekennzeichnet,**
**dass** die Ablaufkante (326) vorzugweise zumindest 5 mm, bevorzugt zumindest 10 mm, weiter bevorzugt zumindest 20 mm, insbesondere zumindest 29 mm unterhalb der Auslauföffnung (316) angeordnet ist und/oder
**dass** die Abrisskante (341) sich in einem Abstand vertikal oberhalb einer maximalen Füllstandshöhe des Grauwasserbehälters (304) von zumindest 5 mm, bevorzugt zumindest 10 mm, insbesondere zumindest 20 mm befindet und/oder
**dass** die Ablaufkante (326) sich in einem Abstand vertikal oberhalb einer maximalen Füllstandhöhe des Grauwasserbehälters (304) von zumindest 5 mm, bevorzugt zumindest 10 mm, insbesondere zumindest 20 mm befindet, und/oder
**dass** eine Durchtrittsfläche des Ablaufs (306) des Frischwasserbehälters (304) gleich groß oder größer ist als eine Durchtrittsfläche der Auslauföffnung (316).

6. Einrichtung (300) nach Anspruch 4 oder 5, **dadurch gekennzeichnet, dass** zwischen Ablaufkante (326) und Abrisskante (341) eine Ablauffläche (340) angeordnet ist, wobei die Ablauffläche (340) vorzugsweise
a) eine vertikale Länge im Bereich 1 cm bis 10 cm, bevorzugt im Bereich von 3 cm bis 7 cm und insbesondere von 5 cm aufweist und/oder
b) eine horizontale Breite im Bereich 1 cm bis 7 cm, bevorzugt im Bereich von 2 cm bis 5 cm und insbesondere von 3 cm aufweist und/oder
c) eine Neigung gegenüber der Horizontalen (H) im Bereich 2° bis 80°, bevorzugt im Bereich von 4° bis 60°, weiter bevorzugt im Bereich 6° bis 40° und insbesondere von 10° aufweist und/oder
d) so ausgebildet ist, dass sie die Strömung im Ablauf (306) in Richtung zum Frischwasserbehälter (304) zurückgelenkt.

7. Einrichtung (300) nach einem der Ansprüche 4 bis 6, **dadurch gekennzeichnet, dass** die Ablauffläche (340) nach Anspruch 6 und/oder die Ablaufkante (326) und/oder die Abrisskante (341) zwischen einem Aufnahmevolumen des Frischwasserbehälters (304) für das Frischwasser und einer Ableitfläche (334) angeordnet ist, wobei die Ableitfläche (334) vorzugsweise
e) sich vertikal erstreckt und/oder
f) eine vertikale Länge im Bereich 0,5 cm bis 5 cm, bevorzugt im Bereich 1 cm bis 3 cm, insbesondere von 2 cm aufweist und/oder
g) eine horizontale Breite im Bereich 1 cm bis 10 cm, bevorzugt im Bereich 2 cm bis 7 cm, insbesondere von 5 cm aufweist und/oder
h) Teil eines Ableitkanals (330, 332, 334, 346) ist.

8. Einrichtung (300) nach einem der vorherigen Ansprüche, **dadurch gekennzeichnet, dass**
ein Überlauf (338) zur Absicherung des Ablaufs (306) gegen Verstopfung besteht, wobei der Überlauf (338) vorzugsweise
i) eine Überlaufkante (338) aufweist, die zumindest 5 mm, bevorzugt zumindest 10 mm, weiter bevorzugt zumindest 20 mm, insbesondere zumindest 23 mm unterhalb der Auslauföffnung (316) angeordnet ist. und/oder
j) in den Grauwasserbehälter (586) mündet.

9. Einrichtung (300) nach Anspruch 8 in Verbindung mit Anspruch 7, **dadurch gekennzeichnet, dass** die Überlaufkante (338) an der Ableitfläche (334), bevorzugt als oberes Ende (338) des Ableitfläche (334) angeordnet ist.

10. Einrichtung (300) nach einem der vorherigen Ansprüche, **dadurch gekennzeichnet, dass** zur Öffnung des Frischwasseranschlusses (302) ein Betätigungsmittel (358), bevorzugt in Form eines Schwimmerventils (358) oder eines Magnetventils mit Füllstandssensor, das mit der Füllstandshöhe des Grauwasserbehälters (586) in Kontakt steht, besteht, wobei das Betätigungsmittel (358) insbesondere Verzögerungsmittel (364, 366) aufweist.

11. Einrichtung (300) nach Anspruch 10, **dadurch gekennzeichnet,**
**dass** die Verzögerungsmittel (364, 366) einen Behälter (364) umfasst, in dem eine Steuerbohrung (366) besteht, wobei der Behälter (364) bevorzugt eine Rückschlagklappe (368) aufweist, die den Zufluss von Flüssigkeit in den Behälter (364) durch die Steuerbohrung (366) sperrt, wobei der Behälter (364) insbesondere eine Abdeckung (374) aufweist, um das direkte Eindringen von Frischwasser aus dem Frischwasserbehälter (304) zu verhindern, und/oder
**dass** die Verzögerungsmittel (364, 366) eine zeitliche Verzögerung zwischen einem Absinken eines Füllstandes im Grauwasserbehälter (586) und der Zufuhr von Frischwasser in den Frischwasserbehälter (304) im Bereich 0 s bis 30 s, bevorzugt von 5 s bis 20 s, insbesondere von 15 s bewirkt und/oder
**dass** die Verzögerungszeit der Verzögerungsmittel (364, 366) größer ist als die Zeit, die erforderlich ist zum Herstellen eines gewünschten Niveaus mit Grauwasser in dem Grauwasserbehälter (586).

12. Verfahren zur Versorgung eines Grauwasserbehälters (586) mit Frischwasser aus einem Frischwasseranschluss (302), wobei der Frischwasseranschluss (302) eine Auslauföffnung (316) aufweist, **dadurch gekennzeichnet, dass** in Strömungsrichtung (S) des Frischwassers nach dem Frischwasseranschluss (302) ein Frischwasserbehälter (304) zur Zwischenspeicherung des Frischwassers verwendet wird, der mit dem Frischwasseranschluss (302) verbunden ist.

13. Verfahren nach Anspruch 12, **dadurch gekennzeichnet, dass** die Einrichtung (300) nach einem der Ansprüche 1 bis 11 verwendet wird.

14. System (700) zur Grauwasserverwendung, das die Einrichtung (300) nach einem der Ansprüche 1 bis 11 umfasst, wobei zusätzlich ein Grauwassererzeuger (12) und/oder ein Grauwasserabnehmer (500, 702) bestehen.

15. System (700) nach Anspruch 14, **dadurch gekennzeichnet,**
**dass** das System (700) eine Einrichtung (500) zur Speicherung von Grauwasser in einem Grauwasserbehälter (506, 586) umfasst, wobei die Einrichtung (300) nach einem der Ansprüche 1 bis 11 mit einer Wandung (328, 329) ausgebildet ist, die zumindest bereichsweise eine Beabstandung (515) zum Grauwasserbehälter (586) aufweist, wobei die Beabstandung insbesondere als Luftspalt (515) ausgebildet ist, und/oder
**dass** das System (700) eine Einrichtung (10) zur Zuleitung von Grauwasser von einem Grauwassererzeuger (12) zu einem Grauwasserabnehmer (500, 702) umfasst.
